(19) Europäisches Patentamt
European Patent Office
Office européen des brevets

(11) EP 4 341 328 B1

(12) **EUROPÄISCHE PATENTSCHRIFT**

(45) Veröffentlichungstag und Bekanntmachung des Hinweises auf die Patenterteilung:
**12.08.2026 Patentblatt 2026/33**

(21) Anmeldenummer: **22727194.7**

(22) Anmeldetag: **16.05.2022**

(51) Internationale Patentklassifikation (IPC):
***C08L 69/00*** *(2006.01)* ***C08J 3/12*** *(2006.01)*
***C08J 3/20*** *(2006.01)*

(52) Gemeinsame Patentklassifikation (CPC):
(C-Sets verfügbar)
**C08J 3/203; C08J 3/12; C08L 69/00;**
C08J 2369/00; C08J 2469/00; C08L 2205/025
(Forts.)

(86) Internationale Anmeldenummer:
**PCT/EP2022/063135**

(87) Internationale Veröffentlichungsnummer:
**WO 2022/243221 (24.11.2022 Gazette 2022/47)**

(54) **REDUZIERUNG DES GEHALTS SPEZIELLER SALZE VON SULFONSÄURE-, SULFONAMIDEN- ODER SULFONIMIDDERIVATEN IM ABWASSER**

REDUCTION OF THE CONTENT OF SPECIFIC SALTS OF SULFONIC ACID, SULFONAMIDE OR SULFONIMIDE DERIVATIVES IN WASTEWATER

RÉDUCTION DE LA TENEUR EN SEL SPÉCIAL D’ACIDE SULFONIQUE, DE SULFONAMIDE OU DE DÉRIVÉS DE SULFONIMIDE DANS LES EAUX USÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2021 EP 21174019**

(43) Veröffentlichungstag der Anmeldung:
**27.03.2024 Patentblatt 2024/13**

(73) Patentinhaber: **Covestro Deutschland AG**
**51373 Leverkusen (DE)**

(72) Erfinder:
- **HEUER, Helmut Werner**
**57074 Siegen (DE)**
- **ERKELENZ, Michael**
**47239 Duisburg (DE)**
- **KAISER, Christian**
**47918 Tönisvorst (DE)**

(74) Vertreter: **Levpat**
**c/o Covestro AG**
**Gebäude K12**
**51365 Leverkusen (DE)**

(56) Entgegenhaltungen:
**WO-A1-2012/065292 WO-A1-2014/018672**
**WO-A1-2015/140671 JP-A- 2013 129 774**

- **DATABASE CA [online] CHEMICAL ABSTRACTS SERVICE, COLUMBUS, OHIO, US; 4 July 2013 (2013-07-04), NUKUI, SHINJI ET AL: "Lamp covers comprising polycarbonate resin compositions with good fire resistance and optical properties", XP002804564, retrieved from STN Database accession no. 2013:1038584**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 341 328 B1



(Forts. nächste Seite)

(52) Gemeinsame Patentklassifikation (CPC): (Forts.)

C-Sets
**C08L 69/00, C08K 5/42, C08K 7/14, C08L 69/00**

**Beschreibung**

Die vorliegende Erfindung betrifft ein Verfahren zur Reduzierung der Menge an speziellen Salzen von Sulfonsäure-, Sulfonamid- oder Sulfonimidderivaten in bei der Herstellung einer Polycarbonatzusammensetzung, enthaltend diese speziellen Salze, anfallenden Abwässern. Ebenso betrifft die Erfindung eine Verwendung verzweigten Polycarbonats in einer Polycarbonatzusammensetzung zur Reduzierung der Menge an speziellen Salzen von Sulfonsäure-, Sulfonamid- oder Sulfonimidderivaten in bei der Herstellung dieser Polycarbonatzusammensetzung, enthaltend diese speziellen Salze, anfallenden Abwässern.

Polycarbonatzusammensetzungen genießen breite Anwendungsmöglichkeiten. Sie müssen jedoch häufig insbesondere für dünnwandige Anwendungen zusätzlich mit Flammschutzmitteln additiviert werden, um die hohen Anforderungen an Flammschutzeigenschaften erfüllen zu können. Dabei stehen die Reduktion der Menge oder sogar Verbannung unterschiedlicher Flammschutzmittel jedoch immer wieder im Fokus, da je nach chemischer Natur der Flammschutzmittel sie bereits als "besonders besorgniserregende Stoffe" (sogenannte substances of very high concern, SVHC) eingestuft werden.

Beispielsweise können halogenierte Flammschutzmittel, welche unter Hitzeeinwirkung unerwünschte Halogenradikale und daraus resultierende Folgeprodukte, die schädlich für die Umwelt sind, freisetzen. In vielen Ländern dieser Welt wird daher eine Verwendung solcher Flammschutzmittel vermieden.

Ein gängiges Flammschutzmittel in Polycarbonatzusammensetzungen ist Kaliumperfluorbutansulfonat (auch Rimarsalz oder C4-Salz genannt). Einige PFAS (Polyfluorierte Alkylsubstanzen) gelten unter REACH bereits als besonders besorgniserregende Stoffe, da sie sehr langlebig sind, sich in Organismen anreichern (Bioakkumulation) und für Menschen schädlich sein können. Für besonders besorgniserregende Stoffe gelten im Rahmen der REACH-Verordnung besondere Auskunftspflichten und es kann eine Zulassungspflicht entstehen, d.h. nur explizit zugelassene Verwendungen dürfen weiter genutzt werden.

Das Umweltbundesamt UBA hält derzeit, insbesondere unter Berücksichtigung des Vorsorgeprinzips, eine Regulierung der gesamten Stoffgruppe für notwendig, denn alle PFAS könnten für lange Zeiträume in der Umwelt verbleiben. Daher erarbeitet das UBA mit anderen Behörden aus Deutschland, den Niederlanden, Dänemark, Schweden und Norwegen einen EU-weiten Beschränkungsvorschlag unter REACH für diese Stoffgruppe. Für lange Zeit wurde diese Verbindung zur reproduzierbar guten Flammwidrigkeitsverbesserung von Polycarbonatzusammensetzungen eingesetzt. Die Bereitstellung entsprechender Polycarbonatzusammensetzungen mit vergleichbarer Flammwidrigkeit aber unter Verwendung weniger Kaliumperfluorbutansulfonat stellt daher eine große Herausforderung dar.

Die WO2008/060714 A2 beschreibt, dass flammwidrige Polycarbonatzusammensetzungen mit gleichzeitig guten Fließeigenschaften und guter Transparenz dadurch erhalten werden können, dass das verwendete Polycarbonat durch Cyanophenol-Endgruppen terminiert wird. Beispiel 16 dieses Dokuments zeigt eine Zusammensetzung mit 70 Teilen linearem Polycarbonat, 30 Teilen verzweigtem Polycarbonat und 0,08 Teilen Kaliumperfluorbutansulfonat.

Die WO03/050176 A1 betrifft transluzente flammwidrige Polycarbonatzusammensetzungen, welche ohne den Einsatz von chlorierten oder bromierten Flammschutzmitteln dennoch eine gute Flammwidrigkeit aufweisen und dabei eine hohe Transparenz und einen niedrigen Haze aufweisen. Zur Lösung wird dabei eine Zusammensetzung, umfassend ein verzweigtes Polycarbonat, PTFE und unter anderem auch Kaliumperfluorbutansulfonat vorgeschlagen.

Das Dokument WO2012/06292 A1 beschreibt Polycarbonatzusammensetzungen mit guter Flammwidrigkeit bei geringen Schichtdicken ohne die Verwendung von chlorierten oder bromierten Flammschutzmitteln. Dazu wird die Verwendung eines linearen Phenyl-enthaltenden Siloxans und eines cyclischen Phenyl-enthaltenden Siloxans vorgeschlagen. Der Verzweigungsgrad der in den Beispielen verwendeten Polycarbonate wird dabei nicht explizit angegeben.

In der JP2013129774A wird eine Zusammensetzung beschrieben, welche lineares und verzweigtes Polycarbonat und ein Flammschutzmittel umfasst. Der Verzweigungsgrad der in den Beispielen verwendeten Polycarbonate wird dabei nicht explizit angegeben.

Auch in der WO2014/018672A1 und der WO2015/140971A1 werden Polycarbonatzusammensetzungen offenbart. Jedoch ist auch hier der Verzweigungsgrad des verzweigten Polycarbonats unklar oder ein nur sehr breiter Bereich an Verzweigungsgraden ist offenbart.

Alle diese Zusammensetzungen werden in der Regel durch Compoundierung der einzelnen Bestandteile in der Schmelze und anschließende Granulierung hergestellt. Dazu muss die Schmelze der Zusammensetzung abgekühlt werden. Dies wird häufig durch die Verwendung von Wasser, d. h. dem direkten Kontakt der Schmelze mit Wasser realisiert. Das so anfallende Prozesswasser kann dadurch Bestandteile der Zusammensetzung aufnehmen, so dass diese nachher im anfallenden Abwasser vorhanden sind. Dies ist für einige Additive nicht wünschenswert, da das Abwasser im Anschluss entsprechend aufgearbeitet werden muss, damit diese Additive nicht in die Umwelt gelangen. Zu diesen Additiven, die nicht in die Umwelt gelangen sollen, zählt unter anderem Kaliumperfluorbutansulfonat.

Ausgehend von diesem Stand der Technik bestand die Aufgabe der vorliegenden Erfindung darin, mindestens einen Nachteil des Stands der Technik zu überwinden. Insbesondere bestand die Aufgabe der vorliegenden Erfindung darin, ein Verfahren bereitzustellen, bei dem der Gehalt an Alkali-, Erdalkali- oder Ammoniumsalzen aliphatischer oder

aromatischer Sulfonsäure-, Sulfonamid- oder Sulfonimidderivate im Abwasser reduziert werden kann, wobei das Abwasser bei der Herstellung einer Zusammensetzung anfällt, welche lineares Polycarbonat und Alkali-, Erdalkali- oder Ammoniumsalze aliphatischer oder aromatischer Sulfonsäure-, Sulfonamid- oder Sulfonimidderivate umfasst. Dabei soll die Zusammensetzung jedoch eine gewisse Menge an Alkali-, Erdalkali- oder Ammoniumsalze aliphatischer oder aromatischer Sulfonsäure-, Sulfonamid- oder Sulfonimidderivate umfassen, um eine gute Flammwidrigkeit der resultierenden Zusammensetzung zu gewährleisten. Bevorzugt soll die Zusammensetzung mindestens eine Flammwidrigkeit aufweisen, welche der UL94-Klassifikation von V-0 bei 2,00 mm, bevorzugt 1,5 mm entspricht. Insbesondere sollen die Maßnahmen zur Reduzierung des Gehalts an Alkali-, Erdalkali- oder Ammoniumsalzen aliphatischer oder aromatischer Sulfonsäure-, Sulfonamid- oder Sulfonimidderivate so ausgestaltet sein, dass sie in gängige Verfahrensabläufe integriert werden können. Ganz besonders bevorzugt sollen diese Maßnahmen zudem so gestaltet sein, dass die tatsächlich verwendete Menge an Alkali-, Erdalkali- oder Ammoniumsalzen aliphatischer oder aromatischer Sulfonsäure-, Sulfonamid- oder Sulfonimidderivate effektiver genutzt wird. Dies bedeutet, dass möglichst viel der Alkali-, Erdalkali- oder Ammoniumsalze aliphatischer oder aromatischer Sulfonsäure-, Sulfonamid- oder Sulfonimidderivate, welche der Compoundierung zugesetzt werden, später auch wieder in der resultierenden Zusammensetzung wiederzufinden sind. Dadurch wird möglichst wenig der Alkali-, Erdalkali- oder Ammoniumsalze aliphatischer oder aromatischer Sulfonsäure-, Sulfonamid- oder Sulfonimidderivate im Prozesswasser/Abwasser verloren.

Mindestens eine, bevorzugt alle der oben genannten Aufgaben wurden durch die vorliegende Erfindung gelöst. Überraschend wurde gefunden, dass unter Verwendung eines gewissen Anteils an verzweigtem Polycarbonat in der zu compoundierenden Zusammensetzung die Menge an Alkali-, Erdalkali- oder Ammoniumsalzen aliphatischer oder aromatischer Sulfonsäure-, Sulfonamid- oder Sulfonimidderivate im zur Herstellung der Zusammensetzung anfallenden Abwasser reduziert werden kann. Dadurch ist es zum einen möglich, Abwasser zu erhalten, welche weniger aufgearbeitet werden müssen/ weniger belastet sind. Damit ist das erfindungsgemäße Verfahren deutlich ökologischer und durch weniger Aufarbeitungsschritte auch ökonomischer. Ähnliches gilt für die erfindungsgemäße Verwendung. Zudem führt dies dazu, dass die Menge an eingesetzten Alkali-, Erdalkali- oder Ammoniumsalzen aliphatischer oder aromatischer Sulfonsäure-, Sulfonamid- oder Sulfonimidderivate deutlich effektiver genutzt wird. Dies bedeutet, dass der Großteil der Alkali-, Erdalkali- oder Ammoniumsalze aliphatischer oder aromatischer Sulfonsäure-, Sulfonamid- oder Sulfonimidderivate, welche bei der Compoundierung der Bestandteile, umfassend lineares und verzweigtes Polycarbonat, eingesetzt werden, später auch in der resultierenden Zusammensetzung vorhanden ist. Es geht also wenig Alkali-, Erdalkali- oder Ammoniumsalz aliphatischer oder aromatischer Sulfonsäure-, Sulfonamid- oder Sulfonimidderivate im Prozesswasser/Abwasser verloren. Auch dies macht das erfindungsgemäße Verfahren und die erfindungsgemäße Zusammensetzung ökonomischer. Zudem lässt sich das erfindungsgemäße Verfahren einfach in bereits bestehende Verfahrensabläufe/ bestehende Anlagen integrieren, da lediglich eine weitere Komponente zur Compoundierung hinzugegeben werden muss (und die Menge des linearen Polycarbonats entsprechend angepasst werden muss). Gleichzeitig hat sich herausgestellt, dass der Zusatz von einer gewissen Menge an verzweigtem Polycarbonat zur Zusammensetzung, umfassend lineares Polycarbonat und Alkali-, Erdalkali- oder Ammoniumsalze aliphatischer oder aromatischer Sulfonsäure-, Sulfonamid- oder Sulfonimidderivate dazu führt, dass eine Zusammensetzung resultiert, welche mindestens einer UL94 Klassifikation von V-0 bei 1,5 mm entspricht. Dies wurde selbst für geringe Menge an Alkali-, Erdalkali- oder Ammoniumsalze aliphatischer oder aromatischer Sulfonsäure-, Sulfonamid- oder Sulfonimidderivate in der Zusammensetzung, wie beispielsweise 0,040 bis 0,095 Gew.-% in Bezug auf die Gesamtzusammensetzung beobachtet. Daher kann erfindungsgemäß auch eine Zusammensetzung hergestellt werden, welche die die Menge einer Verbindung, welche auf der SVHC-REACH-Liste der ECHA steht, reduziert. Dabei ist es insbesondere überraschend, dass in den resultierenden Zusammensetzung gegebenenfalls sogar auf weitere Additive zur Polycarbonatzusammensetzung verzichtet werden kann, welche häufig für die Erzielung von hoher Flammwidrigkeit bei dünnen Schichtdicken verwendet wird. Unter anderem weist die Zusammensetzung bevorzugt selbst ohne PFTE, ohne ein halogeniertes Flammschutzmittel und/oder auch ohne ein Polysiloxan-Polycarbonat-Blockcokondensat mindestens eine UL94 Klassifikation von V-0 bei einer Schichtdicke von mindestens 2,0, bevorzugt 1,5 mm auf. Bevorzugt ist gleichzeitig auch eine leichte Fließverbesserung der Polymerschmelze bei ansonsten nahezu identischen Eigenschaftswerten zu beobachten.

Erfindungsgemäß wird ein Verfahren zur Reduzierung des Gehalts einer Komponente (C), welche ausgewählt ist aus der Gruppe von Alkali-, Erdalkali- oder Ammoniumsalzen aliphatischer oder aromatischer Sulfonsäure-, Sulfonamid- oder Sulfonimidderivate und Kombinationen aus diesen, im bei der Herstellung einer Zusammensetzung anfallenden Abwasser bereitgestellt, wobei die Zusammensetzung

(A) lineares Polycarbonats und

(C) eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, bevorzugt Kaliumperfluor-1-butansulfonat und/ oder Kaliumdiphenylsulfonsulfonat, besonders bevorzugt Kaliumperfluor-1-butansulfonat

umfasst, dadurch gekennzeichnet, dass die Zusammensetzung zusätzlich

(B) ein Polycarbonat mit einem Verzweigungsgrad von 0,8 bis 1,5 mol-% umfasst. Wie bereits oben beschrieben, wurde gefunden, dass der Zusatz der Komponente (B) zu einer Reduzierung des Gehalts der Komponente (C) im Abwasser führt.

Bevorzugt wird ein Verfahren zur Reduzierung des Gehalts einer Komponente (C), welche ausgewählt ist aus der Gruppe von Alkali-, Erdalkali- oder Ammoniumsalzen aliphatischer oder aromatischer Sulfonsäure-, Sulfonamid- oder Sulfonimidderivate und Kombinationen aus diesen, im bei der Herstellung einer Zusammensetzung anfallenden Abwasser bereitgestellt, wobei die Zusammensetzung

(A) lineares Polycarbonats,

(C) eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, Kaliumperfluor-1-butansulfonat und/ oder Kaliumdiphenylsulfonsulfonat, besonders bevorzugt Kaliumperfluor-1-butansulfonat und

(E) ein cyclisches Siloxan der Formel $(R^1{}_2SiO)_y$ und /oder ein Siloxan, welches eine trifunktionelle Siloxaneinheit der Formel $R^2SiO_{3/2}$ umfasst,

worin $R^1$ jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise
worin $R^2$ jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht,

umfasst, dadurch gekennzeichnet, dass die Zusammensetzung zusätzlich
(B) ein Polycarbonat mit einem Verzweigungsgrad von 1,01 bis 1,5 mol-% umfasst.

Erfindungsgemäß wird dabei als Komponente (A) ein lineares Polycarbonat eingesetzt. Erfindungsgemäß wird dabei der Begriff "linear" insbesondere zur Abgrenzung zur "verzweigten" Komponente (B) verwendet. Dem Fachmann sind lineare Polycarbonate bekannt. Ihm ist auch bekannt, dass viele als "linear" bezeichnete Polycarbonate einen geringen Anteil an Verzweigungen aufweisen können. Dies resultiert teilweise durch den Herstellungsprozess des Polycarbonats. Ein Beispiel für diese intrinsische Verzweigungen sind so genannte Fries-Strukturen, wie sie für Schmelzepolycarbonate in der EP 1 506 249 A1 beschrieben sind. Erfindungsgemäß bevorzugt bedeutet der Begriff "linear", dass das Polycarbonat einen Verzweigungsgrad von ≤ 0,4 mol-% aufweist. Der Verzweigungsgrad ist dabei, wie unten zur Komponente (B) ausgeführt, definiert.

Bei der Komponente (A) handelt es sich bevorzugt um ein aromatisches Polycarbonat. Unter "Polycarbonat" im erfindungsgemäßen Sinne werden sowohl Homopolycarbonate als auch Copolycarbonate verstanden. Erfindungsgemäß können auch Mischungen von Polycarbonaten verwendet werden, wobei dann aber jede der einzelnen Komponenten linear sind.

Erfindungsgemäß ist es bevorzugt, dass die Zusammensetzungen, die nach dem erfindungsgemäßen Verfahren erhalten werden, 4 bis 85 Gew.-% der Komponente (A), bevorzugt 5 bis 82 Gew.-%, besonders bevorzugt 15 bis 81 Gew.-%, insbesondere bevorzugt 20 bis 80 Gew.-% enthalten. Ein Anteil von 4 bis 85 Gew.-% der Komponente (A), bzw. der oben beschriebenen bevorzugten Gew.-% der Gesamtzusammensetzung bedeutet erfindungsgemäß, dass die Zusammensetzung auf Polycarbonat basiert.

Die Herstellung der linearen Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung der Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise

Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phthalimidine, abgeleitet von Isatin- oder Phenolphthaleinderivaten, sowie deren kernalkylierte und kernarylierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (Aa) bis (Ca)

(Aa) (Ba) (Ca),

in denen R' jeweils für C1- bis C4-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (Aa), (Ba) und (Ca). Ganz besonders bevorzugt ist Bisphenol A.

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen. Bevorzugt wird jedoch kein Cyanophenol eingesetzt als Kettenabbrecher.

Erfindungsgemäß bevorzugt ist es des Weiteren, dass das lineare Polycarbonat (A) und/oder gegebenenfalls auch das später beschriebene Polycarbonat (B) Endgruppen der Formel (2a), (2b) und/oder (2c) umfasst:

(2a), (2b), (2c),

wobei * für die Position steht, mit der die Formeln (2a), (2b) und (2c) das jeweilige Polycarbonat (A) und/oder (B) terminieren. Des Weiteren bevorzugt weist das lineare Polycarbonat (A) Endgruppen der Formel (2a) und/oder (2b) auf, insbesondere bevorzugt der Formel (2a).

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Besonders bevorzugte Polycarbonate (A) sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (Ia), (IIa) und (IIIa), abgeleitete Homo- oder Copolycarbonate, insbesondere mit Bisphenol A.

Die Polycarbonate (A) haben bevorzugt gewichtsmittlere Molekulargewichte Mw von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 μm bis 20 μm. Konzentration der Lösungen: 0,2 Gew.-%. Flussrate: 1,0 ml/min, Temperatur der Lösungen: 30°C. Verwendung einer UV- und/oder RI-Detektion.

Die Schmelzevolumenfließrate (MVR), bestimmt gemäß ISO 1133-1:2012-03 bei 300°C und 1,2 kg Belastung, beträgt 3 bis 40 $cm^3$/(10 min), bevorzugt 4 bis 35 $cm^3$/(10 min).

Zur Einarbeitung von möglichen Additiven wird die Komponente (A) bevorzugt in Form von Pulvern, Granulaten oder von Gemischen aus Pulvern und Granulaten eingesetzt.

Erfindungsgemäß wird des Weiteren als Komponente (B) ein Polycarbonat mit einem Verzweigungsgrad von 0,8 bis 1,5 mol-% eingesetzt.

Es hat sich erfindungsgemäß herausgestellt, dass der Einsatz der Komponente (B) eine Reduktion der Menge der Komponente (C) im Abwasser, aber auch in der Gesamtzusammensetzung ermöglicht. Dabei weisen die resultierenden Formkörper der Zusammensetzung dennoch gute Flammwidrigkeit, d. h. mindestens eine Flammwidrigkeit nach der Klassifikation UL94 von V-0 bei 2,00 mm, bevorzugt bei 1,5 mm, auf.

Dabei ist es insbesondere bevorzugt, dass das lineare Polycarbonat (A) und das verzweigte Polycarbonat (B) Endgruppen der Formel (2a) und/oder (2b) aufweisen. Ganz besonders bevorzugt weist das lineare Polycarbonat (A) Endgruppen der Formel (2a) auf und das verzweigte Polycarbonat (B) Endgruppen der Formel (2b).

Erfindungsgemäß wird bei Komponente (B) oder Polycarbonat (B) auch von verzweigtem Polycarbonat gesprochen. Dieses hat einen Verzweigungsgrad von 0,8 bis 1,5 mol-%, bevorzugt 0,9 bis 1,3 mol.-%, ganz besonders bevorzugt von 1,00 bis 1,25 mol.-%, besonders bevorzugt von 1,1 bis 1,2 mol.-%. Ebenso ist es bevorzugt, dass Komponente (B) oder Polycarbonat (B) erfindungsgemäß einen Verzweigungsgrad von 1,01 bis 1,5 mol-%, insbesondere bevorzugt von 1,02 bis 1,3 mol-%, besonders bevorzugt von 1,03 bis 1,25 mol-%, weiterhin besonders bevorzugt von 1,04 bis 1,20 mol-%, weiterhin bevorzugt von 1,05 bis 1,15 mol-%, weiterhin bevorzugt von 1,06 bis 1,13 mol-% und ganz besonders bevorzugt von 1,07 bis 1,1 mol-% aufweist.Gemäß der vorliegenden Erfindung ist der Begriff "verzweigt" so zu verstehen, dass das Polycarbonat mehrere Verzweigungspunkte bzw. einen Verzweigungsgrad aufweist. Dieser Verzweigungsgrad wird in mol.-% angegeben und gemäß der folgenden Formel berechnet:

mol.-% (Verzweigungsgrad) =

mol (Verzweiger) /(mol(Verzweiger) + (mol (Dihydroxyverbindung)) ● 100

wobei der "Verzweiger" das Verzweigungsmittel ist, welches mindestens 3 funktionelle Gruppen aufweist und die "Dihydroxyverbindung" die zur Herstellung des Polycarbonats eingesetzte Verbindung mit nur 2 funktionellen Gruppen. Beispielsweise wird in den Beispielen als Verzweiger THPE eingesetzt und die Dihydroxyverbindung ist BPA. Dann ergibt sich:

mol.-% (Verzweigungsgrad) = (m(THPE)[g] / M(THPE)[g/mol]) / ((m(THPE)[g] / M(THPE)[g/mol]) + (m(BPA)[g] / M (BPA)[g/mol])) • 100

wobei M(THPE) = 306 g/mol und M(BPA) = 228 g/mol und m(THPE) und m(BPA) für die Masse der entsprechenden Edukte bei der Herstellung des verzweigten Polycarbonats stehen.

Obwohl die mol-% des Verzweigungsgrads auf Basis der eingesetzten Edukte berechnet wird, bezieht sich erfindungsgemäß der Begriff "Verzweigungsgrad" auf die chemische Struktur des Verzweigers/Verzweigungsmittels, wie sie nach der Reaktion im Polycarbonat vorhanden ist. Dabei ist es bevorzugt, dass das Polycarbonat (B) Verzweigungen aufweist, welche ausgewählt sind aus der Gruppe, bestehend aus den Formel (IIa) bis (IIf) und beliebigen Mischungen davon:

(IIa) (IIb) (IIc)

(IId) (IIe)

(IIf)

,

wobei * für die Positionen steht, welche die Verzweigungen mit der Polycarbonatkette verbindet und

R jeweils unabhängig voneinander für H und einem Alkyl, bevorzugt H und Methyl steht,

X für ein lineares oder verzweigtes Alkyl oder eine Einfachbindung, bevorzugt $C(CH_3)_2$ oder eine Einfachbindung

steht,

$R_1$ jeweils unabhängig voneinander für H und einem Alkyl, bevorzugt H und Methyl steht und

$R_2$ jeweils unabhängig voneinander für H und einem Alkyl, bevorzugt H und Methyl steht.

Das verzweigte Polycarbonat (B) kann eine Art der oben gezeigten Verzweigungen aufweisen oder eine Mischung von zwei oder mehreren Verzweigungen. In einer bevorzugten Ausführungsform weist das Polycarbonat (B) Verzweigungen der Formel (IId) auf. Dabei ist es insbesondere bevorzugt, dass $R_1$ und $R_2$ unabhängig voneinander für H oder Alkyl stehen. Besonders bevorzugt steht $R_1$ für Methyl und $R_2$ für H. Eine solche Verzweigungsstruktur resultiert, wenn THPE als Verzweiger eingesetzt wird.

Das Polycarbonat (B) kann bevorzugt durch die oben zu Polycarbonat (A) beschriebenen Wege hergestellt werden. Dabei wird das Polycarbonat (B) jedoch bevorzugt durch das Phasengrenzflächenverfahren hergestellt. Dies ermöglicht es, den Verzweigungsgrad exakt einzustellen.

Für die Herstellung der Polycarbonate (B) geeignete Dihydroxyarylverbindungen sind beispielsweise Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phthalimidine, abgeleitet von Isatin- oder Phenolphthaleinderivaten, sowie deren kernalkylierte und kernarylierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (Aa) bis (Ca)

O, N, R', OH, HO

(Aa) (Ba) (Ca),

in denen R' jeweils für C1- bis C4-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (Aa), (Ba) und (Ca). Ganz besonders bevorzugt ist Bisphenol A.

Wie bereits oben beschrieben, werden Verzweiger/Verzweigungsmittel bei der Synthese des Polycarbonats (B) eingesetzt, um den entsprechenden Verzweigungsgrad zu erhalten. Geeignete Verzweiger sind dabei die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methylbenzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Insbesondere bevorzugt sind Verzweiger der Formeln (IIIa) bis (IIIf):

(IIIa)

(IIIb)

(IIIc)

(IIId)

(IIIe)

(IIIf)

in denen

R jeweils unabhängig voneinander für H und einem Alkyl, bevorzugt H und Methyl steht,
X für ein lineares oder verzweigtes Alkyl oder eine Einfachbindung, bevorzugt $C(CH_3)_2$ oder eine Einfachbindung steht,
$R_1$ jeweils unabhängig voneinander für H und einem Alkyl, bevorzugt H und Methyl steht und
$R_2$ jeweils unabhängig voneinander für H und einem Alkyl, bevorzugt H und Methyl steht.

Insbesondere bevorzugt wird ein Verzweiger der Formel (IId) verwendet. Dabei ist es insbesondere bevorzugt, dass $R_1$ und $R_2$ unabhängig voneinander für H oder Alkyl stehen. Besonders bevorzugt steht $R_1$ für Methyl und $R_2$ für H.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Die Polycarbonate (B) weisen bevorzugt gewichtsmittlere Molekulargewichte Mw von 15.000 g/mol bis 40.000 g/mol, weiter bevorzugt 18.000 bis 34.000 g/mol, besonders bevorzugt von 22.000 g/mol bis 33.000 g/mol, insbesondere

von 23.000 g/mol bis 32.000 g/mol auf, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 μm bis 20 μm. Konzentration der Lösungen: 0,2 Gew.-%. Flussrate: 1,0 ml/min, Temperatur der Lösungen: 30°C. Verwendung einer UV- und/oder RI-Detektion.

Die Schmelzevolumenfließrate (MVR), bestimmt gemäß ISO 1133-1:2012-03 bei 300°C und 1,2 kg Belastung, beträgt 3 bis 40 $cm^3$/(10 min), bevorzugt 4 bis 35 $cm^3$/(10 min).

Erfindungsgemäß ist es bevorzugt, dass die Zusammensetzungen, die nach dem erfindungsgemäßen Verfahren erhalten werden, 14 bis 95 Gew.-% der Komponente (B), bevorzugt 17 bis 94 Gew.-%, besonders bevorzugt 18 bis 84 Gew.-%, ganz besonders bevorzugt 19 bis 79 Gew.-%. Dabei weiß der Fachmann, dass Komponente (B) teurer ist als Komponente (A). Daher wird er versuchen, das Verhältnis von (A) zu (B) so zu optimieren, dass gute Eigenschaften (z. B. ausreichender Flammschutz, gute Verarbeitbarkeit etc.) resultieren, aber für die gewünschten Anwendungen dennoch wirtschaftliche Zusammensetzungen entstehen.

Das erfindungsgemäße Verfahren und auch die erfindungsgemäße Verwendung betrifft die Reduzierung der Menge der Komponente (C) im Abwasser. Dabei ist die Komponente (C) eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen.

Es versteht sich, dass es sich auch um eine Kombination aus zwei oder mehr solcher Flammschutzmittel handeln kann. Ebenso versteht sich, dass es sich dabei auch um zwei oder mehrere Vertreter einer der genannten Verbindungsgruppen handeln kann.

Unter "Derivaten" werden erfindungsgemäß an dieser und anderer Stelle solche Verbindungenverstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Insbesondere ist es bevorzugt, dass die erfindungsgemäßen Zusammensetzung als Komponente (C) eine Verbindung umfassen, welche ausgewählt ist aus der Gruppe von aliphatischen oder aromatischen Sulfonsäurederivaten. Besonders bevorzugt umfasst diese Verbindung keine Lactonmodifizierten Derivate. Insbesondere umfasst diese Verbindung nicht solche Derivate, wie in KR20130124930 A beschrieben.

Besonders bevorzugt umfassen erfindungsgemäße Zusammensetzungen als Flammschutzmittel ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid, teilfluorierte Natrium- oder Kaliumfluoralkylsulfonate oder deren Mischungen.

Bevorzugt werden Natrium- oder Kaliumperfluorbutansulfat, Natrium- oder Kaliumperfluoroctansulfat, Natrium- oder Kaliumdiphenylsulfonsulfonat oder deren Mischungen eingesetzt. Ganz besonders bevorzugt ist Kaliumperfluor-1-butansulfonat, welches kommerziell erhältlich ist, unter anderem als Bayowet® C4 von der Firma Lanxess, Leverkusen, Deutschland. Ebenso bevorzugt wird Kaliumdiphenylsulfonsulfonat, auch bekannt als KSS (CAS 63316-43-8) eingesetzt. Ganz besonders bevorzugt ist Kaliumperfluor-1-butansulfonat und/ oder Kaliumdiphenylsulfonsulfonat.

Die Zusammensetzungen, die nach dem erfindungsgemäßen Verfahren erhalten werden, enthalten bevorzugt 0,040 bis 0,095 Gew.-%, des Weiteren bevorzugt 0,045 bis 0,094 Gew.-%, des Weiteren bevorzugt 0,050 bis 0,093 Gew.-%, des Weiteren bevorzugt 0,055 bis 0,092 Gew.-%, des Weiteren bevorzugt 0,060 bis 0,091 Gew.-%, des Weiteren bevorzugt 0,065 bis 0,090 Gew.-%, des Weiteren bevorzugt 0,070 bis 0,085 Gew.-% der Komponente (C).

Es ist bevorzugt, dass das erfindungsgemäße Verfahren in sämtlichen Ausgestaltungen einen Schritt umfasst, bei dem der Gehalt an Komponente (C) im bei der Herstellung der beschriebenen Zusammensetzung anfallenden Abwasser gemessen wird. Dabei wird der Gehalt der Komponente (C) im Abwasser bevorzugt über DIN38407-42:2011-03 gemessen. Diese Methode wird weiter unten nochmals näher erläutert.

Des Weiteren ist es bevorzugt, dass nach der Messung des Gehalts der Komponente (C) der gestimmte Wert mit einem vorbestimmten Wert verglichen wird.

Ebenso können die Zusammensetzungen, die nach dem erfindungsgemäße Verfahren erhalten werden, gegebenenfalls eine Verstärkungsfaser als Komponente (D) enthalten. Diese Verstärkungsfasern können bevorzugt ausgewählt sein aus Glasfasern oder Carbonfasern.

Die Glasfasern basieren üblicherweise auf einer Glaszusammensetzung, ausgewählt aus der Gruppe der M-, E-, A-, S-, R-, AR-, ECR-, D-, Q- oder C-Gläser, wobei E-, S- oder C-Glas bevorzugt sind.

Die Glasfasern können in Form von Schnittglasfasern, sowohl Langfasern als auch Kurzfasern, Mahlfasern,

Glasfasergeweben oder Mischungen der vorgenannten Formen eingesetzt werden, wobei die Schnittglasfasern sowie die Mahlfasern bevorzugt eingesetzt werden. Besonders bevorzugt werden Schnittglasfasern eingesetzt.

Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, elliptische, ovale, 8-förmige und flache Querschnitte eingesetzt, wobei die runden, ovalen sowie flachen Querschnitte besonders bevorzugt sind.

Der Durchmesser eingesetzter Rundfasern vor der Compoundierung beträgt bevorzugt 5 bis 25 μm, weiter bevorzugt 6 bis 20 μm, besonders bevorzugt 7 bis 17 μm, bestimmt mittels lichtmikroskopischer Analyse.

Bevorzugte Flach- und Ovalglasfasern weisen ein Querschnittverhältnis aus Höhe zu Breite von ca. 1,0:1,2 bis 1,0:8,0, bevorzugt 1,0:1,5 bis 1,0:6,0, besonders bevorzugt 1,0:2,0 bis 1,0:4,0 auf.

Bevorzugte Flach- und Ovalglasfasern weisen eine durchschnittliche Faserhöhe von 4 μm bis 17 μm, weiter bevorzugt von 6 μm bis 12 μm und besonders bevorzugt 6 μm bis 8 μm sowie eine durchschnittliche Faserbreite von 12 μm bis 30 μm, weiter bevorzugt 14 μm bis 28 μm und besonders bevorzugt 16 μm bis 26 μm auf. Die Faserabmessungen sind bevorzugt mittels lichtmikroskopischer Analyse bestimmt.

Die Glasfasern sind bevorzugt mit einer Glasschlichte an der Oberfläche der Glasfaser modifiziert. Bevorzugte Glasschlichten umfassen Epoxy-modifizierte, Polyurethanmodifizierte und nichtmodifizierte Silanverbindungen sowie Mischungen der vorgenannten Silanverbindungen. Die Glasfasern können auch nicht mit einer Glasschlichte modifiziert sein.

Die verwendeten Glasfasern zeichnen sich dadurch aus, dass die Auswahl der Faser nicht durch die Wechselwirkungscharakteristik der Faser mit der Polycarbonatmatrix beschränkt ist. Sowohl für eine starke Anbindung an die Polymermatrix als auch bei einer nicht-anbindenden Faser zeigt sich eine Verbesserung der erfindungsgemäßen Eigenschaften der Zusammensetzungen.

Eine Anbindung der Glasfasern an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

Erfindungsgemäß können auch Carbonfasern als Verstärkungsfasern eingesetzt werden. Carbonfasern werden industriell üblicherweise aus Vorstufen wie z. B. Polyacrylfasern durch Pyrolyse (Carbonisierung) gewonnen. In den erfindungsgemäßen Zusammensetzungen können Langfasern und Kurzfasern verwendet werden. Bevorzugt werden Kurzfasern eingesetzt.

Die Länge der geschnittenen Fasern liegt bevorzugt zwischen 3 mm und 125 mm. Besonders bevorzugt werden Fasern der Länge 3 mm bis 25 mm eingesetzt.

Neben Fasern mit rundem Querschnitt sind auch Fasern mit kubischer Dimension (plättchenförmig) einsetzbar.

Neben den geschnittenen Fasern werden alternativ bevorzugt gemahlene Carbonfasern eingesetzt. Bevorzugte gemahlene Carbonfasern weisen Längen von 50 μm bis 150 μm auf.

Die Carbonfasern sind gegebenenfalls mit organischen Schlichten gecoatet, um besondere Anbindungen an die Polymermatrix zu ermöglichen. Die bevorzugten Schlichten entsprechen den für Glasfasern genannten.

Kurzschnittfasern und gemahlene Carbonfasern werden den polymeren Basismaterialien üblicherweise durch Compoundierung zugesetzt.

Für Langfäden wird üblicherweise mit Hilfe spezieller technischer Verfahren Kohlenstoff in feinsten Fäden angeordnet. Diese Filamente besitzen üblicherweise einen Durchmesser von 3 bis 10 μm. Aus den Filamenten können auch Rovings, Gewebe, Vliese, Bänder, Schläuche oder Ähnliches hergestellt werden.

Die Verstärkungsfasern (D) können von 0 bis 40 Gew.-%, bevorzugt von 1 bis 35 Gew.-%, besonders bevorzugt von 5 bis 30 Gew.-% und ganz besonders bevorzugt von 9 bis 25 Gew.-% in der resultierenden Zusammensetzung enthalten sein.

Dem Fachmann ist bekannt, dass die Anwesenheit der Verstärkungsfasern in der erfindungsgemäßen Zusammensetzung die Flammwidrigkeit der Zusammensetzung bei jeweils gegebener Schmelzeviskosität beeinflusst. Der Fachmann sieht sich in der Lage, sollte kein V-0 bei 2,00 mm, bevorzugt 1,5 mm erzielt werden, insbesondere durch die vorliegende Erfindung die Menge an Polycarbonat (B) in der Zusammensetzung zu erhöhen, so dass eine entsprechende Flammwidrigkeit bei gleichbleibender Schmelzeviskosität von V-0 bei 2,0 mm, bevorzugt 1,5 mm erhalten wird. Erfindungsgemäß ist es bevorzugt, dass Zusammensetzungen ohne eine Verstärkungsfaser (D) eine Flammwidrigkeit von mindestens V-0 bei 2,0 mm aufweisen. Ebenso ist es bevorzugt, dass Zusammensetzung mit einer Verstärkungsfaser (D) eine Flammwidrigkeit von mindestens V-0 bei 1,5 mm aufweisen. Ebenso bevorzugt gleichzeitig ist es bevorzugt, dass Zusammensetzungen mit einer Verstärkungsfaser (D) eine Flammwidrigkeit von mindestens 5VA bei 3,0 mm aufweisen.

Die Zusammensetzungen, welche nach dem erfindungsgemäßen Verfahren erhalten werden, umfassen die Komponenten (A) bis (D) in den angegebenen Gewichtsprozenten, wobei sich die Gewichtsprozente jeweils immer

(soweit nicht anders angegeben) auf die Summe der Komponenten (A) bis (D) bezieht.

Es ist bevorzugt, dass die Zusammensetzung

(A) 4 bis 85 Gew.-% lineares Polycarbonat,

(B) 14 bis 95 Gew.-% Polycarbonat mit einem Verzweigungsgrad von 0,8 bis 1,5 mol-%,

(C) 0,050 bis 0,095 Gew.-% der Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, und

(D) 0 bis 40 Gew.-% einer Verstärkungsfaser

umfasst, wobei sich die Gew.-% auf die Summe der Komponenten (A) bis (D) beziehen.

Bevorzugt umfasst die Zusammensetzung die Komponenten (A) bis (D) in den folgenden Mengen:

5 bis 75 Gew.-% (A), besonders bevorzugt 8 bis 70 Gew.-%, ganz besonders bevorzugt 9 bis 65 Gew.-%, insbesondere bevorzugt 45 bis 66 Gew.-%,

14 bis 84 Gew.-% (B), besonders bevorzugt 16 bis 81 Gew.-%, ganz besonders bevorzugt 17 bis 50 Gew.-%, insbesondere bevorzugt 18 bis 35 Gew.-%,

0,050 bis 0,095 Gew.-% (C), besonders bevorzugt 0,065 bis 0,093 Gew.-%, ganz besonders bevorzugt 0,075 bis 0,091 Gew.-% und

5 bis 30 Gew.-% (D), besonders bevorzugt 6 bis 25 Gew.-%, besonders bevorzugt 7 bis 22 Gew.-% , ganz besonders bevorzugt 9 bis 21 Gew.-%,

wobei sich die Gew.-% auf die Summe der Komponenten (A) bis (D) beziehen.

Ebenso ist es bevorzugt, dass die erfindungsgemäße Zusammensetzung die Komponenten (A) bis (C) in den folgenden Mengen umfasst:

4 bis 85 Gew.-% (A), besonders bevorzugt 6 bis 83 Gew.-%, ganz besonders bevorzugt 7 bis 80 Gew.-%, insbesondere bevorzugt 60 bis 79 Gew.-%,

14 bis 95 Gew.-% (B), besonders bevorzugt 16 bis 93 Gew.-%, ganz besonders bevorzugt 17 bis 92 Gew.-%, insbesondere bevorzugt 19 bis 25 Gew._%,

0,050 bis 0,095 Gew.-% (C), besonders bevorzugt 0,065 bis 0,093 Gew.-%, ganz besonders bevorzugt 0,075 bis 0,091 Gew.-% und

wobei sich die Gew.-% auf die Summe der Komponenten (A) bis (C) beziehen.

Die angegebenen Gewichtsprozenten beziehen sich im Sinne der vorliegenden Erfindung immer auf die resultierenden Zusammensetzungen (erhalten durch das erfindungsgemäße Verfahren). Das heißt, es sind die Zusammensetzungen, die nach Compoundierung und Granulierung erhalten werden. Im Wesentlichen entsprechen die Gewichtsprozente aber den bei der Compoundierung zudosierten jeweiligen Mengen der einzelnen Bestandteile. Der Fachmann ist in der Lage, insbesondere auch durch die vorliegende Erfindung zu bestimmen, wie viel Gewichtsprozente zudosiert werden müssen, damit die resultierende Zusammensetzung die angegebenen Gewichtsprozente aufweist.

Dabei ist der Begriff "umfassen" bevorzugt als "im Wesentlichen bestehend aus" und ganz besonders bevorzugt als "bestehend aus" zu verstehen. Der Fachmann ist in der Lage, sollte die Zusammensetzung aus den angegebenen Komponenten bestehen und die Gew.-% sich nicht zu 100 ergänzen, diese entsprechend so umzurechnen, dass sich 100 Gew.-% ergeben.

Erfindungsgemäß ist es des Weiteren bevorzugt, dass die Zusammensetzung, welche durch das erfindungsgemäße Verfahren erhalten wird, zusätzlich

(E) ein cyclisches Siloxan der Formel $(R^1{}_2SiO)_y$ und /oder ein Siloxan, welches eine trifunktionelle Siloxaneinheit der

Formel $R^2SiO_{3/2}$ umfasst,

worin $R^1$ jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise

worin $R^2$ jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht.

Handelt es sich bei (E) um ein Siloxan der Formel $(R^1{}_2SiO)_y$, so ist es bevorzugt, dass die fluorierte Kohlenwasserstoffgruppe, für die $R^1$ stehen kann, ausgewählt wird aus der Gruppe, bestehend aus 3-Fluorpropyl, 3,3,3-Trifluorpropyl, 5,5,5,4,4,3,3-Heptafluorpentyl, Fluorphenyl, Difluorphenyl und Trifluortolyl. Besonders bevorzugt handelt es sich bei dem cyclischen Siloxan der Formel $(R^1{}_2SiO)_y$ um Octamethylcyclotetrasiloxan, 1,2,3,4-Tetramethyl-1,2,3,4-tetravinylcyclotetrasiloxan, 1,2,3,4-Tetramethyl-1,2,3,4-Tetraphenylcyclotetrasiloxan, Octaethylcyclotetrasiloxan, Octypropylcyclotetrasiloxan, Octybutylcyclotetrasiloxan, Decamethylcyclopentasiloxan, Dodecamethylcyclohexasiloxan, Tetradecamethylcycloheptasiloxan, Hexadecamethylcyclooctasiloxan, Eicosamethylcyclodecasiloxan, Octaphenylcyclotetrasiloxan. Besonders bevorzugt ist dabei Octaphenylcyclotetrasiloxan.

Handelt es sich bei (E) um ein Siloxan, welches eine trifunktionelle Siloxaneinheit der Formel $R^2SiO_{3/2}$ umfasst, ist es bevorzugt, dass dieses Siloxan diese Formel zu mindestens 90 mol.-%, besonders bevorzugt zu mindestens 95 mol.-% und ganz besonders bevorzugt zu 100 mol.-% umfasst, bezogen auf die Gesamtheit der mole an Siloxaneinheiten (M Einheit, D Einheit, T Einheit, Q Einheit). Dabei stellt die Formel $R^2SiO_{3/2}$ eine T Einheit dar. Wie dem Fachmann bekannt, stellt eine M Einheit die Formel $T_3SiO_{1/2}$ dar (worin R Wasserstoff oder eine monovalente organische Gruppe darstellt), D stellt eine bifunktionelle Einheit der Formel $R_2SiO$ dar (worin R Wasserstoff oder eine monovalente organische Gruppe darstellt) und eine Q Einheit stellt eine tetrafunktionelle Siloxaneinheit der Formel $SiO_2$ dar.

Diese trifunktionelle Siloxaneinheit der Formel $R^2SiO_{3/2}$ ist auch als Polysilsesquioxan bekannt. Sie kann neben den T Einheiten auch M Einheiten aufweisen. Die Strukturen sind dabei dem Fachmann bekannt. Sie können verbrückende Strukturen oder Käfigstrukturen aufweisen.

Bevorzugt ist $R^2$ dabei ausgewählt aus Wasserstoff, $C_1$-$C_{12}$-Alkyl, $C_1$-$C_{12}$ Alkenyl, $C_1$-$C_{12}$-Alkoxy, $C_1$-$C_{12}$-Acyl, $C_3$-$C_8$-Cycloalkyl oder Phenyl. Besonders bevorzugt wird $R^2$ ausgewählt aus $C_1$-$C_6$-Alkyl, $C_1$-$C_6$-Alkenyl, $C_1$-$C_6$-Alkoxy und Phenyl. Des Weiteren bevorzugt wird $R^2$ ausgewählt aus Methyl, Ethyl, Propyl, Butyl und Hexyl. Besonders bevorzugt stellt $R^2$ Methyl dar. Besonders bevorzugt sind Polymethylsilsesquioxan und Octymethylsilsesquioxan.

Es ist bevorzugt, dass die erfindungsgemäße Zusammensetzung keine linearen Siloxane mit Phenylgruppen enthalten. Insbesondere ist es bevorzugt, dass die Zusammensetzung keinen linearen Siloxane mit Phenylgruppen, wie in der WO2012/065292 A1 offenbart enthalten. Bei solchen Siloxanen handelt es sich in der Regel um Öle, da es sich um Oligomere handelt. Diese sind zum einen schwer zu der Zusammensetzung zu zudosieren und zum anderen können sie nicht gewünschte Einflüsse auf die Eigenschaften der Zusammensetzung nehmen.

Es ist bevorzugt, dass (E), falls vorhanden, in den Zusammensetzungen, welche durch das erfindungsgemäße Verfahren erhalten werden, in Mengen von 0,5 bis 2,5 Gew.-%, besonders bevorzugt von 0,75 bis 2,15 Gew.-% und ganz besonders bevorzugt von 0, 9 bis 1,5 Gew.-% eingesetzt wird.

Ebenso ist es bevorzugt, dass die Zusammensetzung, welche durch das erfindungsgemäße Verfahren erhalten wird, zusätzlich

(F) mindestens ein weiteres Additiv ausgewählt aus der Gruppe, bestehend aus Thermostabilisatoren, Entformungsmitteln, UV-Absorbern, Verträglichkeitsvermittlern, Antioxidantien, IR-Absorbern, Fließverbesserer, Umesterungsstabilisatoren, Additive für die Lasermarkierung, Schlagzähmodifkatoren, lichtstreuende Diffusionsadditive und Farbmitteln umfasst.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf den erfindungsgemäßen Effekt der guten Flammwidrigkeit auswirken.

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228 PC), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 4:1) oder Doverphos® S-9228 PC mit Irganox® B900 bzw. Irganox® 1076) eingesetzt.

Als Entformungsmittel kommen insbesondere Pentaerythritoltetrastearat (PETS) bzw. Glycerinmonostearat

(GMS) in Frage.

Die UV-Absorber weisen eine möglichst geringe Transmission unterhalb 400 nm und eine möglichst hohe Transmission oberhalb von 400 nm auf. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy- Benzotriazole, wie 2-(3',5'-Bis-(1,1-dimethylbenzyl)-2'-hydroxy-phenyl)-benzotriazol (Tinuvin® 234, BASF SE, Ludwigshafen), 2-(2'-Hydroxy-5'-(tert.-octyl)-phenyl)-benzotriazol (Tinuvin® 329, BASF SE, Ludwigshafen), Bis-(3-(2H-benztriazolyl)-2-hydroxy-5-tert.-octyl)methan (Tinuvin® 360, BASF SE, Ludwigshafen), 2-(4,6-Diphenyl-1,3,5-triazin-2-yl)-5-(hexyloxy)-phenol (Tinuvin® 1577, BASF SE, Ludwigshafen), sowie Benzophenone wie 2,4-Dihydroxybenzophenon (Chimasorb® 22 , BASF SE, Ludwigshafen) und 2-Hydroxy-4-(octyloxy)-benzophenon (Chimassorb® 81, BASF SE, Ludwigshafen), 2,2-Bis[[(2-cyano-1-oxo-3,3-diphenyl-2-propenyl)oxy]-methyl]-1,3-propandiylester (9CI) (Uvinul® 3030, BASF SE, Ludwigshafen), 2-[2-Hydroxy-4-(2-ethylhexyl)oxy]phenyl-4,6-di(4-phenyl)phenyl-1,3,5-triazine (Tinuvin® 1600, BASF SE, Ludwigshafen), Tetra-ethyl-2,2'-(1,4-phenylen-dimethyliden)-bismalonat (Hostavin® B-Cap, Clariant AG) oder N-(2-Ethoxyphenyl)-N'-(2-ethyl-phenyl)-ethandiamid (Tinuvin® 312, CAS-Nr. 23949-66-8, BASF SE, Ludwigshafen).

Besonders bevorzugte spezielle UV-Stabilisatoren sind Tinuvin® 360, Tinuvin® 329, Tinuvin® 312, Tinuvin® 326 und/oder Tinuvin® 1600, ganz besonders bevorzugt sind Tinuvin® 329, Tinuvin® 326 und/oder Tinuvin® 360.

Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%.

Gängige Schlagzähmodifikatoren, wie z.B. Polyethylenwachse, sind dem Fachmann bekannt.

Übliche lichtstreuende Diffusionsadditive, wie z.B. Polyacrylate, Copolyacrylate oder Polysilsesquioxane, sind dem Fachmann ebenfalls bekannt.

Die Farbmittel sind dem Fachmann bekannt. Sie umfassen bevorzugt sowohl Pigmente, insbesondere Titandioxid, und/oder organische Farbmittel. Wenn Titandixoid in der Zusammensetzung enthalten ist, ist es bevorzugt bis zu 15 Gew.-%, ganz besonders bevorzugt bis zu 3 Gew.-% ebenso bevorzugt bis zu 2 Gew.-% bezogen auf die Gesamtzusammensetzung enthalten. Alternativ kann das Titandioxid auch von 3 bis 15 Gew.-%, bevorzugt 7 bis 15 Gew.-% bezogen auf die Gesamtzusammensetzung enthalten sein. Der Fachmann weiß, dass Titandioxid Einfluss auf die Flammwidrigkeit der Zusammensetzung haben kann. Daher sind Farben, welche dadurch erhalten werden, dass sie unter anderem Titandioxid enthalten, für eine Erzielung von mindestens V-0 bei 2,00 mm, bevorzugt 1,50 mm besonders herausfordernd.

Umfasst die erfindungsgemäße Zusammensetzung die Komponente(n) (E) und /oder (F), so beziehen sich die angegebenen Mengen jeweils auf die Summe der vorhandenen Komponenten (A) bis (E) und/ oder (F).

Bevorzugt umfasst, bevorzugt besteht aus, die erfindungsgemäße Zusammensetzung die Komponenten (A) bis (F) in den folgenden Mengen:

5 bis 75 Gew.-% (A), besonders bevorzugt 8 bis 70 Gew.-%, ganz besonders bevorzugt 9 bis 65 Gew.-%

14 bis 84 Gew.-% (B), besonders bevorzugt 19 bis 81 Gew.-%, ganz besonders bevorzugt 24 bis 80 Gew.-%

0,050 bis 0,095 Gew.-% (C), besonders bevorzugt 0,065 bis 0,093 Gew.-%, ganz besonders bevorzugt 0,075 bis 0,091 Gew.-%

5 bis 30 Gew.-% (D), besonders bevorzugt 6 bis 25 Gew.-%, besonders bevorzugt 7 bis 22 Gew.-% , ganz besonders bevorzugt 9 bis 21 Gew.-%,

0 bis 2,5 Gew.-% (E), besonders bevorzugt 0,5 bis 2,2 Gew.-% (E), ganz besonders bevorzugt 0,75 bis 1,5 Gew.-% (E), und

0 bis 3 Gew.-% (F), besonders bevorzugt 1 bis 2,5 Gew.-% (F), ganz besonders bevorzugt 1,3 bis 2,0 Gew.-% (F)

wobei sich die Gew.-% auf die Summe der Komponenten (A) bis (F) beziehen.

Dabei ist es besonders bevorzugt, dass die erfindungsgemäße Zusammensetzung aus den Komponenten (A) bis (F) besteht.

Das UL94 Prüfverfahren beziehungsweise die entsprechende Klassifizierung ist dem Fachmann bekannt. Dabei handelt es sich in dem einen Fall um das Brandverhalten UL94 V bei 50 W, 20 mm Vertikal. Dieses Prüfverfahren wird bei der Ermittlung der Brennbarkeitsklassen UL 94 V-0, V-1, V-2 eingesetzt. Der andere Fall wird in der Klasse UL 5V beschrieben. Die Klassifizierung in Brennbarkeitsklassen erfolgt durch Bewertung der Nachbrenn- und Nachglühzeit

sowie des brennenden Abtropfens des Probekörpers.

Die Klassifizierung erfolgt für die geprüfte Probekörperdicke in die Stufen V-0, V-1, V-2, 5VA und 5VB (Vertikalbrennprüfung). Diese stehen - geordnet nach der Höhe der Anforderung - im Einzelnen für:

- V-2: Verlöschen einer vertikal eingespannten Probe innerhalb von 30 Sekunden. Brennendes Abtropfen von Kunststoffschmelze zulässig.
- V-1: wie V-2, jedoch kein brennendes Abtropfen von Kunststoffschmelze zulässig. Maximal 60 Sekunden Nachglimmen.
- V-0: wie V-1, jedoch Verlöschen der Flamme innerhalb von 10 Sekunden. Maximal 30 Sekunden Nachglimmen.

Kunststoffe, die mindestens die Klassifizierung V-2 erfüllen, können zusätzlich mit der 500-Watt-Flamme (125 mm Flammhöhe) geprüft werden:

- 5VB: Verlöschen einer vertikal eingespannten Probe nach fünfmaliger Beflammung für je fünf Sekunden; kein Abtropfen zulässig.
- 5VA: wie 5VB, zusätzlicher Test an einer horizontal eingespannten Platte; weder Abtropfen noch Bildung von Brandlöchern mit einem Durchmesser >1 mm sind zulässig.

Die Vorbehandlung der Probestäbe für UL94V erfolgt dabei:

2 Tage / 23 °C / 50 % rel. Feuchte

7 Tage / 70 °C / Umluftofen

Flammenhöhe: 20 mm

Beflammungszeit: 2 x 10 s

Die zweite Beflammung der Probe beginnt unmittelbar nach Beendigung der 1. Nachbrennzeit.

Folgende Bedingungen gelten für das Brandverhalten UL94 5V:
500 W, 125 mm Vertikal

Dieses Verfahren kommt bei der Ermittlung der Brennbarkeitsklassen UL 94-5VA und -5VB zum Einsatz.

Hierbei wird das Brennverhalten an Stäben sowie eine eventuelle Lochbildung an Platten beurteilt

Vorbehandlung:

2 Tage / 23 °C / 50 % rel. Feuchte.

7 Tage / 70 °C / Umluftofen

Die Zusammensetzung, die durch das erfindungsgemäße Verfahren erhalten wird, ist bevorzugt dadurch gekennzeichnet, dass sie frei von Polytetrafluorethylen (PTFE) ist. PTFE ist als Antitropfmittel bekannt und wird zur Verbesserung der UL94 Klassifizierung häufig in Polycarbonatzusammensetzungen eingesetzt. Es wurde zusätzlich erfindungsgemäß gefunden, dass der Einsatz von PTFE in den Zusammensetzungen, die durch das erfindungsgemäße Verfahren erhalten wird, nicht notwendig ist und dennoch bevorzugt eine UL94 Klassifikation von V-0 bei 1,5 mm erzielt werden kann. PTFE ist dem Fachmann bekannt. PTFE ist in diversen Produktqualitäten kommerziell verfügbar. Hierzu zählen Hostaflon® TF2021 oder aber PTFE-Blends wie Blendex® B449 (ca. 50 Gew.-% PTFE und ca. 50 Gew.-% SAN [aus 80 Gew.-% Styrol und 20 Gew.-% Acrylnitril]) der Firma Chemtura.

Ebenso ist es bevorzugt, dass die Zusammensetzung, die durch das erfindungsgemäße Verfahren erhalten wird, frei von halogenierten Flammschutzmitteln ist. Auch dieses wird als Flammschutzmittel häufig Polycarbonatzusammensetzungen zur Verbesserung ihrer Flammwidrigkeit zugesetzt. Es wurde zusätzlich erfindungsgemäß gefunden, dass der Einsatz von halogenierten Flammschutzmitteln in den Zusammensetzungen bevorzugt nicht notwendig ist und dennoch eine UL94 Klassifikation von V-0 bei 1,5 mm erzielt werden kann. Dabei wird erfindungsgemäß bevorzugt auf alle chemischen Verbindungen verzichtet, welche mindestens ein Halogenatom aufweisen. Eines der gängigsten halogenierten Flammschutzmittel ist Tetrabrombisphenol-A oligocarbonat (TBBOC).

Ebenso ist es bevorzugt, dass die Zusammensetzung, die durch das erfindungsgemäße Verfahren erhalten

wird, frei von einem Polysiloxan-Polycarbonat-Blockcokondensat ist. Solche Polysiloxan-Polycarbonat-Blockcokondensate weisen intrinsisch gute Flammschutzeigenschaften auf und werden daher häufig in Polycarbonatzusammensetzungen verwendet. Es wurde zusätzlich erfindungsgemäß gefunden, dass der Einsatz von Polysiloxan-Polycarbonat-Blockcokondensaten in den Zusammensetzungen bevorzugt nicht notwendig ist und dennoch eine UL94 Klassifikation von V-0 bei 2,00 mm, bevorzugt 1,5 mm erzielt werden kann. Dem Fachmann sind Polysiloxan-Polycarbonat-Blockcokondensate bekannt. Diese werden häufig auch als SiCoPC bezeichnet. Sie enthalten in der Regel Siloxanblöcke, die mit Bisphenolen zu entsprechenden Polymeren aufkondensiert werden.

Erfindungsgemäß ist es bevorzugt, dass die Zusammensetzung, die durch das erfindungsgemäße Verfahren erhalten wird, frei von Polytetrafluorethylen und einem halogenierten Flammschutzmittel ist. Ebenso ist es bevorzugt, dass die Zusammensetzung, die durch das erfindungsgemäße Verfahren erhalten wird, frei von Polytetrafluorethylen und einem Polysiloxan-Polycarbonat-Blockcokondensat ist. Ebenso ist es bevorzugt, dass die Zusammensetzung, die durch das erfindungsgemäße Verfahren erhalten wird, frei von einem halogenierten Flammschutzmittel und einem Polysiloxan-Polycarbonat-Blockcokondensat ist. Ganz besonders bevorzugt ist die Zusammensetzung, die durch das erfindungsgemäße Verfahren erhalten wird, frei von Polytetrafluorethylen, einem halogenierten Flammschutzmittel und einem Polysiloxan-Polycarbonat-Blockcokondensat.

Beim erfindungsgemäßen Verfahren wird die oben näher beschriebene Zusammensetzung hergestellt. Dabei ist es bevorzugt, dass das Verfahren zur Herstellung der Zusammensetzung die folgenden Schritte umfasst:

(a) Compoundierung zumindest der Komponenten (A) bis (C) und

(b) Granulierung des aus Schritt (a) erhaltenen Compounds unter Anwesenheit von Wasser.

Dabei ist es für den Fachmann ersichtlich, dass in Schritt (a) alle Bestandteile der Zusammensetzung, insbesondere Komponenten (A) bis (F), soweit vorhanden, compoundiert werden.

Als Compoundieren bezeichnet man in der Polymeraufbereitung die Herstellung einer fertigen Kunststoff-Formmasse, dem Compound, aus gegebenenfalls mehreren polymeren Rohstoffen unter gegebenenfalls Zugabe von Polymeradditiven wie beispielsweise die oben genannten Komponenten (C) bis (F). Die Compoundierung erfolgt überwiegend in Knetern oder Extrudern und umfasst die Verfahrensoperationen Fördern, Aufschmelzen, Dispergieren, Mischen, Entgasen und Druckaufbau. Der Compound wird erfindungsgemäß häufig auch als Zusammensetzung, die nach dem erfindungsgemäßen Verfahren erhalten wurden, bezeichnet.

Bevorzugt umfasst die erfindungsgemäße Compoundierung in Schritt (a) die folgenden Schritte:

(a1) optionales Mischen der Komponenten (A) und (B) in Form von Granulaten und/oder Pulvern,

(a2) Einspeisung zumindest der Komponenten (A) bis (C), bevorzugt zumindest der Komponenten (A) bis (F) in ein Compoundierungsaggregat, wobei, falls Verfahrensschritt (a1) durchgeführt wurde, die resultierende Mischung aus (a1) gemeinsam mit den anderen Komponenten eingespeist wird und

(a3) Zuführung thermischer und/oder mechanischer Energie im Compoundierungsaggregat aus (a2), so dass eine Temperatur von 200°C bis 350°C, bevorzugt 220°C bis 320°C, besonders bevorzugt 230°C bis 300°C erreicht wird, dadurch Aufschmelzen, Mischen und ineinander Dispergieren zumindest der Komponenten (A) bis (C), bevorzugt mindestens der Komponenten (A) bis (F) und anschließende Entgasung der resultierenden Mischung in der Entgasungszone des Compoundierungsaggregats.

Unter "Granulat" im Sinne der Erfindung wird eine Komponente oder eine Mischung aus mehreren Komponenten verstanden, die im festen Aggregatszustand vorliegt, wobei die festen Partikel eine Teilchengröße von mindestens 2 mm und im allgemeinen von nicht mehr als 10 mm aufweisen. Die Granulatkörner können beliebige Form aufweisen, beispielsweise Linsenform, Kugelform oder Zylinderform. Dieser Begriff wird unter anderem auch zur Abgrenzung zu "Pulvern" verwendet. Unter "Pulver" oder "pulverförmig" im Sinne der Erfindung wird eine Komponente oder eine Mischung aus mehreren Komponenten verstanden, die im festen Aggregatszustand vorliegt und bei denen die Partikel Teilchengrößen von kleiner als 2 mm, bevorzugt von kleiner als 1 mm, insbesondere von kleiner als 0,5 mm aufweisen.

Compoundieraggregate sind dem Fachmann bekannt. Bei dem Compoundierungsaggregat handelt es sich bevorzugt um einen Zweischneckenextruder, besonders bevorzugt um einen Zweischneckenextruder mit gleichsinnig rotierenden Wellen, wobei der Zweischneckenextruder ein Längen/Durchmesser-Verhältnis der Schneckenwelle bevorzugt von 32 bis 44, besonders bevorzugt von 34 bis 38 aufweist. Dabei ist es bevorzugt, dass das Compoundierungsaggregat eine Aufschmelz- und Mischzone oder eine kombinierte Aufschmelz- und Mischzone aufweist.

An die Compoundierung des Verfahrensschritts (a) schließt sich eine durch Abkühlung herbeigeführte zumindest teilweise Erstarrung des Compounds an. Diese wird durch die Anwesenheit des Wassers in Verfahrensschritt (b)

herbeigeführt. Dabei ist es bevorzugt, dass im Verfahrensschritt (b) die Zusammensetzung zumindest zeitweilig in Form einer Schmelze mit dem Wasser in Kontakt kommt.

Als Wasser kann prinzipiell jedes optisch klare Wasser eingesetzt werden, beispielsweise filtriertes Flusswasser oder Brunnenwasser. Bevorzugt wird demineralisiertes Wasser verwendet. Im Allgemeinen zeigt das verwendete demineralisierte Wasser Leitfähigkeiten von weniger als 20 μS/cm, bevorzugt weniger als 12 μS/cm, wobei die Bestimmung nach DIN EN 27888 in Verbindung mit DIN 50930-6, erfolgt. Dem Fachmann sind gängige Verfahren und deren Prozessschritte und Anlagen zur Durchführung des Verfahrensschritts (b) bekannt. Insbesondere ist es bevorzugt, dass es sich bei der Granulierung des Verfahrensschritts (b) um eine Unterwassergranulierung oder Stranggranulierung handelt. Diese Granulierungsschritte unterscheiden sich im Wesentlichen in der Reihenfolge, in den Schritte der Abkühlung und der Zerkleinerung des Compounds. Bei der Stranggranulierung wird bevorzugt zunächst ein Polymerstrang (gebildet aus dem Compound) durch den Austritt der Schmelze aus einer Düse gebildet. Als Düse kann beispielswiese ein Lochplatte eingesetzt werden, wie eine Lochplatte mit Kreisführung. Als Lochplatten kommen im Allgemeinen beheizte Lockplatten in Betracht wie beispielsweise welche mit Kern-Rand-Beheizung, vom Heizkanal-Typ oder vom Wärmetauscher-Typ. Diese Düse kann Teil des Compoundierungsaggregates sein. Dieser Strang kann entweder direkt mit Wasser in Kontakt treten oder zunächst erst mit der Umgebungsluft und dann Wasser in Kontakt treten. Es erfolgt eine Verweilzeit des Strangs in Wasser. Anschließend wird der zumindest teilweise abgekühlte Polymerstrang dann granuliert, d. h. geschnitten. Dies kann entweder unter Wasser oder aber in Umgebungsluft erfolgen. Bevorzugt verlässt der Polymerstrang dazu jedoch zunächst das Wasser und ist somit wieder in der Umgebungsluft. Die Zerkleinerung an sich erfolgt in der Regel durch rotierende Messer, die den zumindest teilweise erstarrten Polymerstrang zerschneiden bzw. zerbrechen. Es wird ein Granulat erhalten. Bei der Unterwassergranulierung tritt der Polymerstrang (gebildet aus dem Compound) ebenfalls durch eine Düse in Form einer Schmelze aus. Als Düse kann beispielswiese ein Lochplatte eingesetzt werden, wie eine Lochplatte mit Kreisführung. Als Lochplatten kommen im Allgemeinen beheizte Lockplatten in Betracht wie beispielsweise welche mit Kern-Rand-Beheizung, vom Heizkanal-Typ oder vom Wärmetauscher-Typ. Auch hier kann die Düse Teil des Compoundierungsaggregates sein. Die Schmelze wird bevorzugt in eine in der Regel Wasser gefüllten Schneidkammer gedrückt. Die Schneidkammer ümgibt die Düse. Die Größe und Gestalt der Schneidkammer ist prinzipiell frei wählbar und richtet sich nach praktischen Gesichtspunkten wie Größer der Lochplatte, Geometrie der Messer, Kühlmittelmenge, die durch die Schneidkammer transportiert werden soll oder Durchsatz an Polymer. Im Gegensatz zur Stranggranulierung erfolgt hier unmittelbar hinter der Düse eine Zerkleinerung der Schmelze. Diese kann ebenfalls mittels eines rotierenden Messers erfolgen. In der Regel erfolgt der Austritt aus der Düse, gefolgt von der Zerkleinerung unmittelbar in Wasser (und nicht an der Luft). Möglich ist aber auch eine Sprühvernebelung von Temperierflüssigkeiten. Durch die Zerkleinerung wird ein Granulat gebildet, welches im Anschluss vom Wasser getrennt wird. Dafür eignen sich dem Fachmann bekannte gängige Methoden, wie beispielsweise ein Separator. Bei der Unterwassergranulierung werden in er Regel sphärische Granulate erhalten, während bei der Stranggranulierung zylinderförmige Granulate erhalten werden. Erfindungsgemäß wird bevorzugt eine Stranggranulierung eingesetzt. Dies hat den Vorteil, dass sie so durchgeführt werden kann, dass kein weiterer Aufarbeitungsschritt der Trennung von Wasser und Granulat erfolgen muss.

Es werden Granulate erhalten, welche bevorzugt in mindestens einem Wert der Länge, Höhe oder Breite mindestens 0,5 bis 5 mm aufweisen. Dabei kann es sein, dass die Granulate keine einheitliche Form aufweisen. Hierbei kann beispielsweise ein Parameter der Höhe, Breite, Länge des Granulats nicht identisch zu den jeweiligen anderen beiden Parametern der Höhe, Breite und Länge sein. Ganz besonders bevorzugt weisen die Granulate eine zylinderartige und/oder linsenartige Form auf. Hierbei sollen jedoch geringfügige Abweichungen von der geometrischen Form mit im Begriff "Granulat" eingeschlossen sein. Diese zylinderartige und/oder linsenförmige Form ist bevorzugt dadurch gekennzeichnet, dass die Granulate eine Länge von 0,5 bis 5 mm, eine Breite von 0,5 bis 5 mm und eine von Dicke 0,5 bis 5 mm aufweisen. Die Größe der Granulate lässt sich auf für den Fachmann bekannte Weise zum Beispiel über die Größe der Düsen, durch die die Polymerschmelze gedrückt wird, beeinflussen.

Sowohl bei der Stranggranulierung als auch bei der Unterwassergranulierung wird Wasser, in der Regel als Wasserbad, zur Abkühlung verwendet. Dieses Wasser kann Umgebungstemperatur aufweisen oder aber zusätzlich extern gekühlt werden. In jedem Fall weist es eine Temperatur unterhalb der Temperatur der Polymerschmelze auf. Bevorzugt weist das Wasser vor Kontakt mit der Polymerschmelze eine Temperatur von 10 bis 90°C, besonders bevorzugt von 25 bis 85 °C auf. Durch den Kontakt mit der Schmelze verändert sich die Temperatur des Wassers auf für den Fachmann bekannte und berechenbare Weise, teilweise auch nur lokal. Dadurch ergibt sich für den Fachmann auch, inwieweit eine Durchmischung des Wassers bzw. ein teilweiser Ersatz des Wassers durch frisches Wasser notwendig ist, um reproduzierbare Granulierungsergebnisse zu erhalten. Bevorzugt handelt es sich bei der Granulierung um ein kontinuierliches Verfahren. Dabei ist es möglich, dass zumindest ein Teil des Wassers kontinuierlich aus dem System entfernt und frisches Wasser kontinuierlich dem System hinzugeführt wird. Ebenfalls möglich ist auch, dass das Kühlwasser eine gewisse Zeit ohne Austausch gegen frisches Wasser im Kreis über einen Wärmeaustauscher zur Abkühlung gefahren wird. Dabei ist mit dem Begriff "frisches Wasser" Wasser gemeint, welches nicht unmittelbar zuvor mit der Polymerschmelze in Kontakt war. Es kann sich aber um Wasser handeln, welches bereits mit der Polymerschmelze in

Kontakt war, jedoch im Anschluss durch die Umgebung wieder abgekühlt wurde und/oder aber welches zunächst aufbereitet wurde und dann dem System erneut zugeführt wurde. Bei der Aufbereitung kann es sich um eine chemische Aufbereitung handeln zur Entfernung von Komponenten in dem Wasser.

Für die Stranggranulierung ist es erfindungsgemäß bevorzugt, dass eine Wärmetauschfläche von 60000 $mm^2$ bis 5000000 $mm^2$, bevorzugt von 70000 $mm^2$ bis 4900000 $mm^2$ und ganz besonders bevorzugt von 80000 $mm^2$ bis 4800000 $mm^2$ der Stränge vorliegt. Diese Kennzahl ist dem Fachmann bekannt. Sie ergibt sich bevorzugt gemäß der Formel:

Wärmetauschfläche ($mm^2$) = Strangdurchmesser (mm) x $\pi$ x Eintauchlänge (mm) x Fadenanzahl

Dabei ist die Eintauchlänge die Länge, mit der die Stränge in das Wasser als Kühlflüssigkeit eintauchen. Die Fadenanzahl definiert, wie viele Stränge in das Wasser eintauchen. Sie entspricht in der Regel der Anzahl an Löchern in der Lochplatte.

Ebenso ist es bevorzugt für die Stranggranulierung, dass die Kontaktzeit der Polymerschmelze mit dem Wasser im Bereich von 1s bis 5 s, bevorzugt 2s bis 4 s und ganz besonders bevorzugt 2s bis 3 s liegt. Die Kontaktzeit ergibt sich aus der Eintauchlänge der Fäden im Wasser in mm dividiert durch die Abzugsgeschwindigkeit in mm/s.

Je nachdem, wie die Wanne, in der das Wasser als Kühlmedium betrieben wird, kann der Wasserdurchlauf unterschiedlich sein. Ebenso ist es möglich, dass kein Durchfluss des Wasser in der Spinnwanne erfolgt. Dabei muss die hergestellte Granulatmenge pro Zeiteinheit berücksichtigt werden.

Es ist bevorzugt, dass ein Kühlwasserfaktor in kg/l bei der Stranggranulierung im Bereich von 0,01 kg/l min bis 0,06 kg/l min, besonders bevorzugt von 0,015 kg/l min bis 0,055 kg/l min und ganz besonders bevorzugt von 0,02 kg/l min bis 0,05 kg/l min verwendet wird. Der Kühlwasserfaktor ergibt sich aus dem Maschinendurchsatz (kg/min) / Spinnwannenvolumen (l).

Für die Stranggranulierung ist es besonders bevorzugt, dass eine Wärmetauschfläche von 60000 $mm^2$ bis 5000000 $mm^2$, bevorzugt von 70000 $mm^2$ bis 4900000 $mm^2$ und ganz besonders bevorzugt von 80000 $mm^2$ bis 4800000 $mm^2$ der Stränge vorliegt, die Kontaktzeit der Polymerschmelze mit dem Wasser im Bereich von 1s bis 5 s, bevorzugt 2s bis 4 s und ganz besonders bevorzugt 2s bis 3 s liegt und ein Kühlwasserfaktor im Bereich von 0,01 kg/l min bis 0,06 kg/l min, besonders bevorzugt von 0,015 kg/l min bis 0,055 kg/l min und ganz besonders bevorzugt von 0,02 kg/l min bis 0,05 kg/l min verwendet wird.

Im Falle der Unterwassergranulierung ergibt sich die Wärmetauschfläche bevorzugt gemäß der Formel:

$$\text{Wärmetauschfläche } (mm^2) = \text{Granulatdurchmesser} / 2)^2 \, (mm^2) \times \pi \times 4.$$

Die Wärmetauschfläche für die Unterwassergranulierung liegt erfindungsgemäß bevorzugt im Bereich von 30 - 50 $mm^2$, besonders bevorzugt im Bereich von 35 - 45 $mm^2$ pro Korn. Dabei hat man mit 40 - 100 Austrittsöffnungen (Düsen) zu rechnen.

Ebenso ist die Kontaktzeit (oder Verweilzeit) der Polymerschmelze zum Kühlwasser bei der Unterwassergranulierung bevorzugt definiert gemäß der Formel:

Rohrleitungslänge (Schneidkammer bis Separator) (mm) x Rohrleitungsquerschnitt ($mm^2$)/ Kühlwasserfließgeschwindigkeit ($mm^3$/s) = Kontaktzeit (s)

Die Kontaktzeit bei der Unterwassergranulierung liegt bevorzugt bei 2 - 50 s , besonders bevorzugt bei 2 - 49 s, ganz besonders bevorzugt bei 2 - 48 s.

Der Kühlwasserfaktor bei der Unterwassergranulierung wird bevorzugt definiert durch die Formel:

Maschinendurchsatz (kg/min) / Umlaufgeschwindigkeit der Kühlwassermenge (l/min) = Kühlwasserfaktor (kg/l)

Der Kühlwasserfaktor bei der Unterwassergranulierung liegt bevorzugt bei 0,03 - 0,15 kg/l, besonders bevorzugt bei 0,03 - 0,10 kg/l, ganz besonders bevorzugt bei 0,03 - 0,09 kg/l.

Unabhängig davon, ob das Verfahren kontinuierlich oder über eine Batch-Fahrweise durchgeführt wird, wird nach Verfahrensschritt (b) Wasser erhalten, welches mit der oben beschriebenen Zusammensetzung, bevorzugt zumindest zeitweilig in Form einer Schmelze, in Kontakt war. In diesem Wasser befinden sich also Bestandteile der Zusammensetzung, welche sich durch Verfahrensschritt (b) ins Wasser begeben haben. Sie können gelöst aber auch in Form einer Suspension (Feststoff in Wasser) vorliegen. In Zusammensetzungen, welche die oben näher beschriebene Komponente (C) enthalten, enthält das Wasser immer einen gewissen Anteil an dieser Komponente. Erfindungsgemäß ist

es jedoch gelungen, dass die Menge an (C) im Wasser reduziert werden kann. Dies erfolgt durch die zusätzliche Verwendung der verzweigten Komponente (B). Dies bietet zum einen den Vorteil, dass weniger an Komponente (C) durch das Herstellungsverfahren des Compounds verloren geht. Dadurch wird die verwendete Menge an (C) effektiver genutzt, was ökologisch sowie auch ökonomisch vorteilhaft ist. Es ist jedoch auch bevorzugt, dass das in Verfahrensschritt (b) anwesende Wasser nach Durchführung des Verfahrensschritts (b) als Abwasser anfällt. Somit enthält also das Abwasser auch weniger (C). Das Abwasser würde in die Umwelt gelangen und muss somit entsprechend aufgearbeitet oder zumindest verdünnt werden. Dadurch, dass erfindungsgemäß die Menge an (C) im Abwasser geringer ist, muss weniger Aufwand in Aufarbeitung / Verdünnung investiert werden. Dies hat erneut ökologische sowie ökonomische Vorteile.

Erfindungsgemäß kann der Anteil der Komponente (C) im Abwasser bevorzugt mittels DIN38407-42:2011-03 bestimmt werden. Bei der Verwendung von Kaliumperfluorbutansulfonat als Komponente (C) wird diese dann über die freie Perfluorbutansäure ($C_4HF_7O_2$) bestimmt. Die freie Perfluorsäure wird dann durch Festphasenextraktion an einem schwachen Anionenaustauscher auf Polymerbasis aus der unfiltrierten Wasserprobe angereichert. Die Festphasen werden mit Wasser und Lösemittel gewaschen und die adsorbierte Substanz anschließend mit ammoniakhaltigem Methanol eluiert. Die Bestätigung und quantitative Bestimmung erfolgt durch Hochleistungs-Flüssigkeitschromatographie gekoppelt mit massenspektrometrischer Detektion (HPLC-MS/MS). Dies bedeutet, dass durch die Bestimmung des Anteils an freier Säure auf den Anteil der Komponente (C) zurückgeschlossen werden kann.

Demgemäß kann eine "Reduzierung des Gehalts der Komponente (C) im bei der Herstellung einer Zusammensetzung anfallenden Abwasser" dadurch bestimmt werden, dass der Gehalt an (C) im Abwasser ohne die Verwendung der Komponente (B) in der Zusammensetzung höher ist als der Gehalt an (C) im Abwasser unter den gleichen Bedingungen nur mit dem Unterschied, dass der Zusammensetzung die Komponente (B) zusätzlich hinzugefügt wurde. Dabei wurde erfindungsgemäß gefunden, dass bei Reduzierung des Gehalts an (C) in der Zusammensetzung der resultierende Gehalt an (C) im Abwasser nicht linear abnimmt, wenn die Komponenten (B) anwesend ist.

Ein weiterer Aspekt der vorliegenden Erfindung betrifft die Verwendung eines Polycarbonats (B) mit einem Verzweigungsgrad von 0,8 bis 1,5 mol-% zur Reduzierung des Gehalts an Komponente (C) im bei der Herstellung einer Zusammensetzung anfallenden Abwasser, wobei die Zusammensetzung

(A) lineares Polycarbonats,

(B) Polycarbonat mit einem Verzweigungsgrad von 0,8 bis 1,5 mol-% und

(C) eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, bevorzugt Kaliumperfluor-1-butansulfonat und/ oder Kaliumdiphenylsulfonsulfonat, besonders bevorzugt Kaliumperfluor-1-butansulfonat

umfasst.

Bei der erfindungsgemäßen Verwendung wird bevorzugt eine Zusammensetzung hergestellt, wie sie oben bereits in unterschiedlichen Bevorzugungen beschrieben wurde. Insbesondere ist die erfindungsgemäße Verwendung dadurch gekennzeichnet, dass die Herstellung der Zusammensetzung die folgenden Schritte umfasst:

(a) Compoundierung zumindest der Komponenten (A) bis (C) und

(b) Granulierung des aus Schritt (a) erhaltenen Compounds unter Anwesenheit von Wasser.

Auch hierbei handelt es sich bevorzugt um die bereits oben näher beschriebenen Verfahrensschritte (a) und/oder (b). Dabei ist es bevorzugt, dass im Verfahrensschritt (b) die Zusammensetzung zumindest zeitweilig in Form einer Schmelze mit dem Wasser in Kontakt kommt. Ebenso oder gleichzeitig ist es bevorzugt, dass in Verfahrensschritt (b) anwesende Wasser nach Durchführung des Verfahrensschritts (b) als Abwasser anfällt. Ebenso oder gleichzeitig ist es bevorzugt, dass es sich bei der Granulierung des Verfahrensschritts (b) um eine Unterwassergranulierung oder Stranggranulierung handelt.

Bei der erfindungsgemäßen Verwendung ist es insbesondere bevorzugt, dass die Zusammensetzung

(A) 4 bis 85 Gew.-%, bevorzugt 5 bis 82 Gew.-%, besonders bevorzugt 15 bis 81 Gew.-%, insbesondere bevorzugt 20 bis 80 Gew.-% eines linearen Polycarbonats, ganz besonders bevorzugt 45 bis 79 Gew.-%,

(B) 14 bis 95 Gew.-%, bevorzugt 17 bis 94 Gew.-%, besonders bevorzugt 18 bis 84 Gew.-%, insbesondere bevorzugt 19 bis 79 Gew.-% eines Polycarbonats und ganz besonders bevorzugt 18 bis 35 Gew.-% mit einem Verzweigungsgrad von 0,8 bis 1,5 mol-%,

(C) 0,040 bis 0,095 Gew.-% der Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, bevorzugt Kaliumperfluor-1-butansulfonat und/ oder Kaliumdiphenylsulfonsulfonat, besonders bevorzugt Kaliumperfluor-1-butansulfonat und

(D) 0 bis 40 Gew.-% einer Verstärkungsfaser

umfasst, wobei sich die Gew.-% auf die Summe der Komponenten (A) bis (D) beziehen.

**Beispiele**

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 275 - 350 °C.

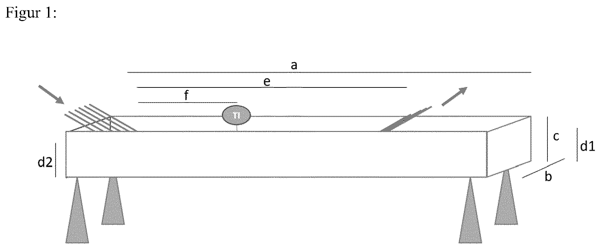

Die resultierende Zusammensetzung wurde mittels Stranggranulierung granuliert. Dabei erfolgte die Abkühlung in einer Spinnwanne gemäß Figur 1 ohne Austausch des Wassers. In Figur 1 bedeutet

| | | |
|---|---|---|
| a: | Länge der Wanne | 2460 mm |
| b: | Breite der Wanne | 295 mm |
| c: | Höhe der Wanne | 165 mm |
| d: | Wasserstand | 138 mm (Durchschnitt) |
| | d1: 125 mm; d2: 150 mm | |
| e: | Eintauchlänge der Stränge | 1400 mm |
| f: | Thermometerposition | 480 mm (nach Eintauchlänge) |

Anzahl der Stränge : 6 Düsenplatte: 6 Loch 3,2 mm
Durchsatz der Anlage: 50 kg/h
Geschwindigkeit der Stränge: 20 m/min
Wasservolumen in der Spinnwanne:

$$a \text{ x } b \text{ x } d = 2460 \text{ mm x } 295 \text{ mm x } 138 \text{ mm} = 100{,}1 \text{ l}$$

Menge in der Versuchszeit:

$$\text{Durchsatz kg/h x 1h/60 min x Versuchsdauer min} = 50 \text{ kg/h x } 1/60 \text{ h/min x } 20 \text{ min} = 16{,}67 \text{ kg}$$

Komponente PC-A1: Lineares Polycarbonat auf Basis von Bisphenol A und Phenol als Kettenabbrecher mit einer Schmelze-Volumenfließrate MVR von 9 $cm^3$/(10 min) (gemäß ISO 1133:2012-03, bei einer Prüftemperatur 300°C und 1,2 kg Belastung). Enthält geringe Mengen TPP.

Komponente PC-A2: Lineares Polycarbonat in Pulverform auf Basis von Bisphenol A und Phenol als Kettenabbrecher mit einer Schmelze-Volumenfließrate MVR von 6 $cm^3$/(10 min) (gemäß ISO 1133:2012-03, bei einer Prüftemperatur von 300°C und 1,2 kg Belastung).

Komponente PC-A3: Lineares Polycarbonat in Pulverform auf Basis von Bisphenol A und Phenol als Kettenabbrecher mit einer Schmelze-Volumenfließrate MVR von 19 $cm^3$/(10 min) (gemäß ISO 1133:2012-03, bei einer Prüftemperatur von 300°C und 1,2 kg Belastung).

Komponente PC-A4: Lineares Polycarbonat auf Basis von Bisphenol A und Phenol als Kettenabbrecher mit einer Schmelze-Volumenfließrate MVR von 9 $cm^3$/(10 min) (gemäß ISO 1133:2012-03, bei einer Prüftemperatur 300°C und 1,2 kg Belastung). Enthält kein TPP.

Komponente PC-B: verzweigtes Polycarbonat auf Basis von Bisphenol A und 1,1,1-Tri-(4-hydroxyphenyl)-ethan (THPE) als Verzweiger (1,3 Gew%) und p-tert.-Butylphenol (BUP) als Kettenabbrecher mit einer Schmelze-Volumenfließrate MVR von 6 $cm^3$/(10 min) (gemäß ISO 1133:2012-03, bei einer Prüftemperatur 300°C und 1,2 kg Belastung).

Komponente C1: Kaliumperfluorbutansulfonat (auch Rimarsalz oder C4-Salz genannt) der Fa. Lanxess AG, Deutschland.

Komponente D1: Chopped strand nicht-anbindende Glasfaser CS108F-14P der Fa. 3B-Fibreglass sprl Belgium.

Komponente D2: Chopped strand nicht-anbindende Glasfaser CS13720 der Fa. 3B-Fibreglass sprl Belgium.

Komponente E1: Octaphenylcycloterasiloxan (OPCTS) der Fa. Shin-Etsu Co, Ltd. Japan.

Komponente F1: Entformungsmittel Pentaerythritoltetrastearat (PETS, Loxiol P 861/3.5 Special) der Fa. Emery Oleochemicals GmbH Germany.

Komponente F2: Gelber Farbstoff MACROLEX YELLOW 3G GRAN der Fa. Lanxess, Deutschland.

Komponente F3: Roter Farbstoff COLORTHERM RED 130 M der Fa. Lanxess, Deutschland.

Komponente F4: Schwarzpigment Ruß LAMP BLACK 101 der fa. Evonik, Deutschland.

Komponente F5: Weißpigment Titandioxid KRONOS 2230 der Fa. Kronos Titan GmbH, Deutschland.

Komponente F6: Triphenylphosphin (TPP) der Fa. BASF SE, Deutschland.

Komponente F7: UV-Absorber Tinuvin 329 der Fa. BASF SE, Deutschland.

Komponente F8: Disflamoll TOF (Tris-isooctylphosphat) der Fa. Lanxess, Deutschland.

Komponente F9: Gelbpigment Heucodur Yellow 3R der Fa. Heubach GmbH, Deutschland.

Komponente F10: Eisenoxid-Rotpigment Bayferrox 110 M der Fa. Lanxess, Deutschland.

Die Bestimmung der **Schmelze-Volumenfließrate** (MVR) erfolgte nach ISO 1133:2012-03 (überwiegend bei einer Prüftemperatur von 300 °C, Masse 1,2 kg) mit dem Gerät Zwick 4106 der Firma Zwick Roell. Zusätzlich wurde der MVR-Wert nach 20 Minuten Vorwärmzeit gemessen (IMVR20'). Dies ist ein Maß für die Schmelzestabilität unter erhöhtem thermischem Stress.

Das **Brandverhalten** wurde nach UL 94 V (50 W, 20 mm Vertical) bestimmt. Vorbehandlung der Probestäbe:

2 Tage / 23 °C / 50 % rel. Feuchte
7 Tage / 70 °C / Umluftofen
Flammenhöhe: 20 mm
Beflammungszeit: 2 x 10 s
Die zweite Beflammung der Probe beginnt unmittelbar nach Beendigung der 1. Nachbrennzeit

Folgende Bedingungen gelten für das Brandverhalten UL94 5V:
500 W, 125 mm Vertikal

Dieses Verfahren kommt bei der Ermittlung der Brennbarkeitsklassen UL 94-5VA und -5VB zum Einsatz.

Hierbei wird das Brennverhalten an Stäben sowie eine eventuelle Lochbildung an Platten beurteilt

Vorbehandlung:

2 Tage / 23 °C / 50 % rel. Feuchte.

7 Tage / 70 °C / Umluftofen

Die **Bestimmung des Asche-Gehaltes** erfolgte nach DIN 51903:2012-11 (850°C, 30 min halten).

Der Anteil der Komponente C wurde mittels DIN38407-42:2011-03 bestimmt. Dies bedeutet, dass die freie Perfluorbutansäure ($C_4HF_7O_2$) bestimmt wurde. Die freie Perfluorsäure wurde dann durch Festphasenextraktion an einem schwachen Anionenaustauscher auf Polymerbasis aus der unfiltrierten Wasserprobe angereichert. Die Festphasen wurden mit Wasser und Lösemittel gewaschen und die adsorbierte Substanz anschließend mit ammoniakhaltigem Methanol eluiert. Die Bestätigung und quantitative Bestimmung erfolgte durch Hochleistungs-Flüssigkeitschromatographie gekoppelt mit massenspektrometrischer Detektion (HPLC-MS/MS

Tabelle 1

| Komponente | | V1 | E1 | E2 |
|---|---|---|---|---|
| PC-A1 (Gew.-%) | | 78,404124 | 58,751219 | 57,763140 |
| PC-A2 (Gew.-%) | | 9,880797 | 9,880797 | 9,880797 |
| PC-B (Gew.-%) | | - | 19,761594 | 19,761593 |
| C (Gew.-%) | | 0,197616 | 0,088927 | 0,088927 |
| D1 (Gew.-%) | | 9,880797 | 9,880797 | 9,880797 |
| E1 (Gew.-%) | | - | - | 0,988080 |
| F1 (Gew.-%) | | 0,444636 | 0,444636 | 0,444636 |
| F2 (Gew.-%) | | 0,000563 | 0,000563 | 0,000563 |
| F3 (Gew.-%) | | 0,001502 | 0,001502 | 0,001502 |

(fortgesetzt)

| Komponente | | V1 | E1 | E2 |
|---|---|---|---|---|
| F4 (Gew.-%) | | 0,004269 | 0,004269 | 0,004269 |
| F5 (Gew.-%) | | 1,185696 | 1,185696 | 1,185696 |
| | | | | |
| MVR (cm$^3$/[10min ]) | 300 °C; 1,20 kg; 6 min | 7,2 | 5,9 | 6,3 |
| MVR (cm$^3$/[10min ]) | 300 °C; 1,20 kg; 19 min | 7,8 | 6,1 | 6,9 |
| | | | | |
| UL94-V | 1,80 mm | V-0 | V-0 | V-0 |
| 48h/168h | | V-0/V-0 | V-0/V-0 | V-0/V-0 |
| V0/V1/V2/durchgefallen (Anzahl) | | 10/0/0/0 | 10/0/0/0 | 10/0/0/0 |
| Nachbrennzeit (s) | | N;23/N;25 | N;20/N;35 | N;27/N;31 |
| | | | | |
| UL94-V | 1,50 mm | V-0 | V-0 | V-0 |
| 48h/168h | | V-0/V-0 | V-0/V-0 | V-0/V-0 |
| V0/V1/V2/durchgefallen (Anzahl) | | 10/0/0/0 | 10/0/0/0 | 10/0/0/0 |
| Nachbrennzeit (s) | | N;23/N;32 | N;23/N;34 | N;25/N;35 |
| | | | | |
| UL94-V | 1,20 mm | V-2 | V-2 | V-2 |
| 48h/168h | | V-2*/V-0 | V-2/V-2 | V-0/V-2 |
| V0/V1/V2/durchgefallen (Anzahl) | | 8/1/1/0 | 6/0/4/0 | 8/0/2/0 |
| Nachbrennzeit (s) | | N;40/N;29 | N;66/N;44 | N;28/N;29 |
| | | | | |
| UL94-5V | 3,00 mm | 5VA | 5VA | 5VA |
| Bewertungsstufe (Stab) 48h/168h | | erfüllt/erfüllt | erfüllt/erfüllt | erfüllt/erfüllt |
| (Platte) 48h/168h | | erfüllt/erfüllt | erfüllt/erfüllt | erfüllt/erfüllt |
| | | | | |
| Aschegehalt (Mittelwert) (ro) (%) | 850,00000 °C; 0,50000 h | 10,92 | 10,98 | 11,38 |
| | | | | |
| Perfluorbutansulfonsäure | | | | |
| Spinnwasserprobe nach Versuch | µg/l | 149 | 32 | 16 |
| Basiswert Spinnwasser | µg/l | 3,2 | 8,1 | 7,5 |
| * bedeutet zweiter Brennsatz, d. h. die Probe wurde nochmals vermessen | | | | |

Tabelle 2

| Komponente | | V2 | E3 | E4 |
|---|---|---|---|---|
| PC-A1 (Gew.-%) | | 68,562850 | 48,870422 | 47,882343 |
| PC-A2 (Gew.-%) | | 9,880797 | 9,880797 | 9,880797 |
| PC-B (Gew.-%) | | - | 19,761594 | 19,761593 |
| C (Gew.-%) | | 0,158093 | 0,088927 | 0,088927 |
| D2 (Gew.-%) | | 19,761594 | 19,761594 | 19,761594 |

(fortgesetzt)

| Komponente | | V2 | E3 | E4 |
|---|---|---|---|---|
| E1 (Gew.-%) | | - | - | 0,988080 |
| F1 (Gew.-%) | | 0,444636 | 0,444636 | 0,444636 |
| F2 (Gew.-%) | | 0,000563 | 0,000563 | 0,000563 |
| F3 (Gew.-%) | | 0,001502 | 0,001502 | 0,001502 |
| F4 (Gew.-%) | | 0,004269 | 0,004269 | 0,004269 |
| F5 (Gew.-%) | | 1,185696 | 1,185696 | 1,185696 |
| | | | | |
| MVR ($cm^3$/[10min ]) | 300 °C; 1,20 kg; 6 min | 6,5 | 5,2 | 5,6 |
| MVR ($cm^3$/[10min ]) | 300 °C; 1,20 kg; 19 min | 7,1 | 6 | 6,3 |
| | | | | |
| UL94-V | 1,80 mm | V-0 | V-0 | V-0 |
| 48h/168h | | V-0/V-0 | V-0/V-0 | V-0/V-0 |
| V0/V1/V2/durchgefallen (Anzahl) | | 10/0/0/0 | 10/0/0/0 | 10/0/0/0 |
| Nachbrennzeit (s) | | 27/20 | 20/29 | 18/29 |
| | | | | |
| UL94-V | 1,50 mm | V-0 | V-0 | V-0 |
| 48h/168h | | V-0/V-0 | V-0/V-0 | V-0/V-0 |
| V0/V1/V2/durchgefallen (Anzahl) | | 10/0/0/0 | 10/0/0/0 | 10/0/0/0 |
| Nachbrennzeit (s) | | 30/30 | 23/32 | 25/35 |
| | | | | |
| UL94-V | 1,20 mm | V-0 | V-0 | V-0 |
| 48h/168h | | V-0/V-0* | V-0/V-0 | V-0/V-0 |
| V0/V1/V2/durchgefallen (Anzahl) | | 10/0/0/0 | 10/0/0/0 | 10/0/0/0 |
| Nachbrennzeit (s) | | 31/26 | 32/32 | 33/39 |
| | | | | |
| UL94-5V | 6,40 mm | | | |
| Bewertungsstufe (Stab) 48h/168h | | mind. 5-VB | mind. 5-VB | mind. 5-VB |
| Klasse Stabprüfung (ro) | | erfüllt/erfüllt | erfüllt/erfüllt | erfüllt/erfüllt |
| | | | | |
| Aschegehalt (Mittelwert) (ro) (%) | 850,00000 °C; 0,50000 h | 20,63 | 20,81 | 20,88 |
| | | | | |
| Perfluorbutansulfonsäure | | | | |
| Spinnwasserprobe nach Versuch | µg/l | 109 | 35 | 34 |
| Basiswert Spinnwasser | µg/l | 6,4 | 15 | 4,4 |

Tabelle 3:

| Komponente | | V4 | E7 | E8 |
|---|---|---|---|---|
| PC-A4 (Gew.-%) | | 89,253396 | 69,419309 | 69,419308 |
| PC-A3 (Gew.-%) | | 9,103846 | 8,151810 | 9,143515 |

(fortgesetzt)

| Komponente | | V4 | E7 | E8 |
|---|---|---|---|---|
| PC-B (Gew.-%) | | - | 19,834088 | 19,834088 |
| C (Gew.-%) | | 0,128922 | 0,089253 | 0,089253 |
| E1 (Gew.-%) | | - | 0,991704 | - |
| F1 (Gew.-%) | | 0,396682 | 0,396682 | 0,396682 |
| F6 (Gew.-%) | | 0,029751 | 0,029751 | 0,029751 |
| F7 (Gew.-%) | | 0,247926 | 0,247926 | 0,247926 |
| F8 (Gew.-%) | | 0,009917 | 0,009917 | 0,009917 |
| F9 (Gew.-%) | | 0,166110 | 0,166110 | 0,166110 |
| F10 (Gew.-%) | | 0,003967 | 0,003967 | 0,003967 |
| F4 (Gew.-%) | | 0,109087 | 0,109087 | 0,109087 |
| F5 (Gew.-%) | | 0,550396 | 0,550396 | 0,550396 |
| | | | | |
| MVR ($cm^3$/[10min ]) | 300 °C; 1,20 kg; 7 min | 11,8 | 11,4 | 10,7 |
| MVR ($cm^3$/[10min ]) | 300 °C; 1,20 kg; 20 min | 12,7 | 12,5 | 11,8 |
| | | | | |
| UL94-V | 3,00 mm | V-0 | V-0 | V-0 |
| 48h/168h | | V-0/V-0 | V-0/V-0 | V-0/V-0 |
| V0/V1/V2/durchgefallen (Anzahl) | | 10/0/0/0 | 10/0/0/0 | 10/0/0/0 |
| Nachbrennzeit (s) | | N;19/N;35 | N;23/N;30 | N;28/N;25 |
| | | | | |
| UL94-V | 2,80 mm | V-0 | V-0 | V-0 |
| 48h/168h | | V-0/V-0 | V-0/V-0 | V-0/V-0 |
| V0/V1/V2/durchgefallen (Anzahl) | | 10/0/0/0 | 10/0/0/0 | 10/0/0/0 |
| Nachbrennzeit (s) | | N;25/N;25 | N;27/N;27 | N;29/N;28 |
| | | | | |
| Perfluorbutansulfonsäure | | | | |
| Spinnwasserprobe nach Versuch | µg/l | 100,0 | 26,0 | 13,0 |
| Basiswert Spinnwasser | µg/l | 4,8 | 1,1 | 2,1 |

Wie den Tabellen 1 bis 3 zu entnehmen ist, nimmt bei der Reduzierung des Gehalts an (C) in der Zusammensetzung der resultierende Gehalt an (C) im Abwasser überproportional ab, wenn die Komponenten (B) anwesend ist.

**Patentansprüche**

1. Verfahren zur Reduzierung des Gehalts einer Komponente (C), welche ausgewählt ist aus der Gruppe von Alkali-, Erdalkali- oder Ammoniumsalzen aliphatischer oder aromatischer Sulfonsäure-, Sulfonamid- oder Sulfonimidderivate und Kombinationen aus diesen, im bei der Herstellung einer Zusammensetzung anfallenden Abwasser, wobei die Zusammensetzung

   (A) lineares Polycarbonats und
   (C) eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen,
   umfasst, **dadurch gekennzeichnet, dass** die Zusammensetzung zusätzlich

(B) ein Polycarbonat mit einem Verzweigungsgrad von 0,8 bis 1,5 mol-% umfasst.

2. Verfahren nach Anspruch 1, **dadurch gekennzeichnet, dass** das Verfahren zur Herstellung der Zusammensetzung die folgenden Schritte umfasst:

(a) Compoundierung zumindest der Komponenten (A) bis (C) und
(b) Granulierung des aus Schritt (a) erhaltenen Compounds unter Anwesenheit von Wasser.

3. Verfahren nach Anspruch 2, **dadurch gekennzeichnet, dass** im Verfahrensschritt (b) die Zusammensetzung zumindest zeitweilig in Form einer Schmelze mit dem Wasser in Kontakt kommt.

4. Verfahren nach Anspruch 2 oder 3, **dadurch gekennzeichnet, dass** das in Verfahrensschritt (b) anwesende Wasser nach Durchführung des Verfahrensschritts (b) als Abwasser anfällt.

5. Verfahren nach einem der Ansprüche 2 bis 4, **dadurch gekennzeichnet, dass** es sich bei der Granulierung des Verfahrensschritts (b) um eine Unterwassergranulierung oder Stranggranulierung handelt.

6. Verfahren nach einem der Ansprüche 1 bis 5, **dadurch gekennzeichnet, dass** die Zusammensetzung

(A) 4 bis 85 Gew.-% lineares Polycarbonat,
(B) 14 bis 95 Gew.-% Polycarbonat mit einem Verzweigungsgrad von 0,8 bis 1,5 mol-%,
(C) 0,040 bis 0,095 Gew.-% der Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, und
(D) 0 bis 40 Gew.-% einer Verstärkungsfaser

umfasst, wobei sich die Gew.-% auf die Summe der Komponenten (A) bis (D) beziehen.

7. Verfahren nach einem der Ansprüche 1 bis 6, **dadurch gekennzeichnet, dass** die Zusammensetzung zusätzlich (E) ein cyclisches Siloxan der Formel $(R^1{}_2SiO)_y$ und /oder ein Siloxan, welches eine trifunktionelle Siloxaneinheitder Formel $R^2SiO_{3/2}$ umfasst,

worin jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise
worin $R^2$ jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht.

8. Verfahren nach einem der Ansprüche 1 bis 7, **dadurch gekennzeichnet, dass** die Zusammensetzung zusätzlich (F) mindestens ein weiteres Additiv ausgewählt aus der Gruppe, bestehend aus Thermostabilisatoren, Entformungsmitteln, UV-Absorbern, Verträglichkeitsvermittlern, Antioxidantien, IR-Absorbern, Fließverbesserer, Umesterungsstabilisatoren, Additive für die Lasermarkierung, Schlagzähmodifikatoren, lichtstreuende Diffusionsadditive und Farbmitteln umfasst.

9. Verfahren nach Anspruch 8, **dadurch gekennzeichnet, dass** sie aus den Komponenten (A) bis (F) besteht.

10. Verwendung eines Polycarbonats (B) mit einem Verzweigungsgrad von 0,8 bis 1,5 mol-% zur Reduzierung des Gehalts an Komponente (C) im bei der Herstellung einer Zusammensetzung anfallenden Abwasser, wobei die Zusammensetzung

(A) lineares Polycarbonats,
(B) Polycarbonat mit einem Verzweigungsgrad von 0,8 bis 1,5 mol-% und
(C) eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen

umfasst.

**11.** Verwendung nach Anspruch 10, **dadurch gekennzeichnet, dass** die Herstellung der Zusammensetzung die folgenden Schritte umfasst:

(a) Compoundierung zumindest der Komponenten (A) bis (C) und
(b) Granulierung des aus Schritt (a) erhaltenen Compounds unter Anwesenheit von Wasser.

**12.** Verwendung nach Anspruch 11, **dadurch gekennzeichnet, dass** im Verfahrensschritt (b) die Zusammensetzung zumindest zeitweilig in Form einer Schmelze mit dem Wasser in Kontakt kommt.

**13.** Verwendung nach Anspruch 11 oder 12, **dadurch gekennzeichnet, dass** das in Verfahrensschritt (b) anwesende Wasser nach Durchführung des Verfahrensschritts (b) als Abwasser anfällt.

**14.** Verwendung nach einem der Ansprüche 11 bis 13, **dadurch gekennzeichnet, dass** es sich bei der Granulierung des Verfahrensschritts (b) um eine Unterwassergranulierung oder Stranggranulierung handelt.

**15.** Verwendung nach einem der Ansprüche 10 bis 14, **dadurch gekennzeichnet, dass** die Zusammensetzung

(A) 4 bis 85 Gew.-% lineares Polycarbonat,
(B) 14 bis 95 Gew.-% Polycarbonat mit einem Verzweigungsgrad von 0,8 bis 1,5 mol-%
(C) 0,040 bis 0,095 Gew.-% der Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, und
(D) 0 bis 40 Gew.-% einer Verstärkungsfaser

umfasst, wobei sich die Gew.-% auf die Summe der Komponenten (A) bis (D) beziehen.

## Claims

**1.** Method for reducing the content of a component (C), selected from the group of alkali metal, alkaline earth metal or ammonium salts of aliphatic or aromatic sulfonic acid, sulfonamide or sulfonimide derivatives and combinations thereof, in the waste water obtained in the preparation of a composition, wherein the composition comprises

(A) linear polycarbonate and
(C) a compound selected from the group of alkali metal, alkaline earth metal or ammonium salts of aliphatic or aromatic sulfonic acid, sulfonamide or sulfonimide derivatives and combinations thereof,
**characterized in that** the composition additionally comprises
(B) a polycarbonate having a degree of branching of 0.8 to 1.5 mol%.

**2.** Method according to Claim 1, **characterized in that** the method for preparing the composition comprises the following steps:

(a) compounding at least components (A) to (C) and
(b) pelletizing the compound obtained from step (a) in the presence of water.

**3.** Method according to Claim 2, **characterized in that** in method step (b) the composition comes into contact with the water at least temporarily in the form of a melt.

**4.** Method according to Claim 2 or 3, **characterized in that** the water present in method step (b) is obtained as waste water after performing method step (b).

**5.** Method according to any of Claims 2 to 4, **characterized in that** the pelletizing in method step (b) is underwater pelletizing or strand pelletizing.

**6.** Method according to any of Claims 1 to 5, **characterized in that** the composition comprises

(A) 4% to 85% by weight of linear polycarbonate,
(B) 14% to 95% by weight of polycarbonate having a degree of branching of 0.8 to 1.5 mol%,

(C) 0.040% to 0.095% by weight of the compound selected from the group of alkali metal, alkaline earth metal or ammonium salts of aliphatic or aromatic sulfonic acid, sulfonamide or sulfonimide derivatives and combinations thereof, and
(D) 0% to 40% by weight of a reinforcing fibre,

where the % by weight are based on the sum total of components (A) to (D).

**7.** Method according to any of Claims 1 to 6, **characterized in that** the composition additionally comprises

(E) a cyclic siloxane of formula $(R^1{}_2SiO)_y$ and/or a siloxane comprising a trifunctional siloxane unit of formula $R^2SiO_{3/2}$,
in which each $R^1$ independently is a monovalent aliphatic or aromatic hydrocarbon group or a fluorinated hydrocarbon group having in each case 1 to 18 carbon atoms and y is a number from 3 to 12 and
in which each $R^2$ independently is hydrogen, a monovalent aliphatic or aromatic hydrocarbon group having in each case 1 to 18 carbon atoms or a monovalent alkoxy group having 1 to 18 carbon atoms.

**8.** Method according to any of Claims 1 to 7, **characterized in that** the composition additionally comprises
(F) at least one further additive selected from the group consisting of heat stabilizers, mould-release agents, UV absorbers, compatibilizers, antioxidants, IR absorbers, flow improvers, transesterification stabilizers, additives for laser marking, impact modifiers, light-scattering diffusion additives and colorants.

**9.** Method according to Claim 8, **characterized in that** it consists of components (A) to (F).

**10.** Use of a polycarbonate (B) having a degree of branching of 0.8 to 1.5 mol% for reducing the content of component (C) in the waste water obtained in the preparation of a composition, wherein the composition comprises

(A) linear polycarbonate,
(B) polycarbonate having a degree of branching of 0.8 to 1.5 mol% and
(C) a compound selected from the group of alkali metal, alkaline earth metal or ammonium salts of aliphatic or aromatic sulfonic acid, sulfonamide or sulfonimide derivatives and combinations thereof.

**11.** Use according to Claim 10, **characterized in that** the preparation of the composition comprises the following steps:

(a) compounding at least components (A) to (C) and
(b) pelletizing the compound obtained from step (a) in the presence of water.

**12.** Use according to Claim 11, **characterized in that** in method step (b) the composition comes into contact with the water at least temporarily in the form of a melt.

**13.** Use according to Claim 11 or 12, **characterized in that** the water present in method step (b) is obtained as waste water after performing method step (b).

**14.** Use according to any of Claims 11 to 13, **characterized in that** the pelletizing in method step (b) is underwater pelletizing or strand pelletizing.

**15.** Use according to any of Claims 10 to 14, **characterized in that** the composition comprises

(A) 4% to 85% by weight of linear polycarbonate,
(B) 14% to 95% by weight of polycarbonate having a degree of branching of 0.8 to 1.5 mol%,
(C) 0.040% to 0.095% by weight of the compound selected from the group of alkali metal, alkaline earth metal or ammonium salts of aliphatic or aromatic sulfonic acid, sulfonamide or sulfonimide derivatives and combinations thereof, and
(D) 0% to 40% by weight of a reinforcing fibre,

where the % by weight are based on the sum total of components (A) to (D).

## Revendications

1. Procédé de réduction de la teneur d'un composant (C), sélectionné dans le groupe des sels alcalins, alcalino-terreux ou ammonium de dérivés d'acides sulfoniques, de sulfonamides ou de sulfonimides aliphatiques ou aromatiques, ainsi que de combinaisons de ceux-ci, dans les eaux usées produites lors de la fabrication d'une composition, la composition comprenant (A) du polycarbonate linéaire et

   (C) un composé sélectionné dans le groupe des sels alcalins, alcalino-terreux ou ammonium de dérivés d'acides sulfoniques, de sulfonamides ou de sulfonimides aliphatiques ou aromatiques, ainsi que de combinaisons de ceux-ci,
   **caractérisé en ce que** la composition comprend en outre
   (B) un polycarbonate présentant un degré de ramification de 0,8 à 1,5 % en moles.

2. Procédé selon la revendication 1, **caractérisé en ce que** le procédé de fabrication de la composition comprend les étapes suivantes :

   (a) le mélange d'au moins les composants (A) à (C), et
   (b) la granulation du mélange obtenu à l'étape (a) en présence d'eau.

3. Procédé selon la revendication 2, **caractérisé en ce que**, lors de l'étape de procédé (b), la composition est mise en contact avec l'eau, au moins temporairement, sous la forme d'une masse fondue.

4. Procédé selon la revendication 2 ou 3, **caractérisé en ce que** l'eau présente lors de l'étape de procédé (b) est produite sous forme d'eaux usées après la réalisation de l'étape de procédé (b).

5. Procédé selon l'une quelconque des revendications 2 à 4, **caractérisé en ce que** la granulation de l'étape de procédé (b) est une granulation sous eau ou une granulation de brins.

6. Procédé selon l'une quelconque des revendications 1 à 5, **caractérisé en ce que** la composition comprend

   (A) 4 à 85% en poids de polycarbonate linéaire,
   (B) 14 à 95 % en poids de polycarbonate ayant un degré de ramification de 0,8 à 1,5 % en moles,
   (C) 0,040 à 0,095 % en poids du composé sélectionné dans le groupe des sels alcalins, alcalino-terreux ou ammonium de dérivés d'acides sulfoniques, de sulfonamides ou de sulfonimides aliphatiques ou aromatiques, ainsi que de combinaisons de ceux-ci, et
   (D) 0 à 40 % en poids d'une fibre de renforcement,

   les % en poids se rapportant à la somme des composants (A) à (D).

7. Procédé selon l'une quelconque des revendications 1 à 6, **caractérisé en ce que** la composition comprend en outre

   (E) un siloxane cyclique de formule $(R^1{}_2SiO)_y$ et/ou un siloxane comprenant une unité siloxane trifonctionnelle de formule $R^2SiO_{3/2}$,
   dans lesquelles $R^1$ représente, à chaque occurrence indépendamment, un groupe hydrocarboné aliphatique ou aromatique monovalent ou un groupe hydrocarboné fluoré comportant dans chaque cas 1 à 18 atomes de carbone, et y est un nombre de 3 à 12, et
   dans laquelle $R^2$ représente, à chaque occurrence indépendamment, un atome d'hydrogène, un groupe hydrocarboné aliphatique ou aromatique monovalent comportant dans chaque cas 1 à 18 atomes de carbone ou un groupe alcoxy monovalent comportant 1 à 18 atomes de carbone.

8. Procédé selon l'une quelconque des revendications 1 à 7, **caractérisé en ce que** la composition comprend en outre (F) au moins un autre additif sélectionné dans le groupe constitué des thermostabilisants, des agents de démoulage, des absorbeurs d'UV, des agents compatibilisants, des antioxydants, des absorbeurs d'IR, des agents améliorant l'écoulement, des stabilisants de transestérification, des additifs pour le marquage laser, des modificateurs de résistance aux chocs, des additifs de diffusion de la lumière et des colorants.

9. Procédé selon la revendication 8, **caractérisé en ce qu'**elle est constituée des composants (A) à (F).

**10.** Utilisation d'un polycarbonate (B) présentant un degré de ramification de 0,8 à 1,5 % en moles pour réduire la teneur en composant (C) dans les eaux usées produites lors de la fabrication d'une composition, la composition comprenant

(A) du polycarbonate linéaire
(B) un polycarbonate présentant un degré de ramification de 0,8 à 1,5 % en moles et
(C) un composé sélectionné dans le groupe des sels alcalins, alcalino-terreux ou ammonium de dérivés d'acides sulfoniques, de sulfonamides ou de sulfonimides aliphatiques ou aromatiques, ainsi que de combinaisons de ceux-ci.

**11.** Utilisation selon la revendication 10, **caractérisée en ce que** la fabrication de la composition comprend les étapes suivantes :

(a) le mélange d'au moins les composants (A) à (C), et
(b) la granulation du mélange obtenu à l'étape (a) en présence d'eau.

**12.** Utilisation selon la revendication 11, **caractérisée en ce que**, lors de l'étape de procédé (b), la composition est mise en contact avec l'eau, au moins temporairement, sous la forme d'une masse fondue.

**13.** Utilisation selon la revendication 11 ou 12, **caractérisée en ce que** l'eau présente lors de l'étape de procédé (b) est produite sous forme d'eaux usées après la réalisation de l'étape de procédé (b).

**14.** Utilisation selon l'une quelconque des revendications 11 à 13, **caractérisée en ce que** la granulation de l'étape de procédé (b) est une granulation sous eau ou une granulation de brins.

**15.** Utilisation selon l'une quelconque des revendications 10 à 14, **caractérisée en ce que** la composition comprend

(A) 4 à 85% en poids de polycarbonate linéaire,
(B) 14 à 95 % en poids de polycarbonate ayant un degré de ramification de 0,8 à 1,5 % en moles,
(C) 0,040 à 0,095 % en poids du composé sélectionné dans le groupe des sels alcalins, alcalino-terreux ou ammonium de dérivés d'acides sulfoniques, de sulfonamides ou de sulfonimides aliphatiques ou aromatiques, ainsi que de combinaisons de ceux-ci, et
(D) 0 à 40 % en poids d'une fibre de renforcement,

les % en poids se rapportant à la somme des composants (A) à (D).

Figur 1:

a
e
f
c
d1
d2
b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008060714 A2
- WO 03050176 A1
- WO 201206292 A1
- JP 2013129774 A
- WO 2014018672 A1
- WO 2015140971 A1
- EP 1506249 A1
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- KR 20130124930 A
- WO 2012065292 A1
- EP 0839623 A
- WO 9615102 A
- EP 0500496 A


### In der Beschreibung aufgeführte Nicht-Patentliteratur


- Chemistry and Physics of Polycarbonates. **SCHNELL**. Polymer Reviews. Interscience Publishers, 1964, vol. 9
- Polycarbonates. **D. FREITAG** ; **U. GRIGO** ; **P.R. MÜLLER** ; **H. NOUVERTNÉ** ; **BAYER AG**. Encyclopedia of Polymer Science and Engineering. 1988, vol. 11, 648-718
- Polycarbonate. **U. GRIGO** ; **K. KIRCHNER** ; **P.R. MÜLLER**. Polycarbonate, Polyacetale, Polyester, Celluloseester. Carl Hanser Verlag, 1992, vol. 3/1, 117-299
- **H. SCHNELL**. Chemistry and Physics of Polycarbonates. Interscience Publishers, 1964
- **HANS ZWEIFEL**. Plastics Additives Handbook. Hanser Verlag, 2000
- *CHEMICAL ABSTRACTS*, 23949-66-8